(19) Europäisches Patentamt / European Patent Office / Office européen des brevets

(11) **EP 4 070 067 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **20820382.8**

(22) Anmeldetag: **04.12.2020**

(51) Internationale Patentklassifikation (IPC):
**G01M 15/00** (2006.01) **G01M 13/00** (2019.01)

(52) Gemeinsame Patentklassifikation (CPC):
**G01M 13/00; G01M 15/00**

(86) Internationale Anmeldenummer:
**PCT/EP2020/084614**

(87) Internationale Veröffentlichungsnummer:
**WO 2021/110907 (10.06.2021 Gazette 2021/23)**

(54) **VERFAHREN UND VORRICHTUNG ZUR ERMITTLUNG EINES SCHÄDIGUNGSZUSTANDS VON BAUTEILEN**

METHOD AND DEVICE FOR DETERMINING A DAMAGE STATE OF COMPONENTS

PROCÉDÉ ET DISPOSITIF DE DÉTERMINATION D'UN ÉTAT D'ENDOMMAGEMENT DE COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2019 DE 102019218996**

(43) Veröffentlichungstag der Anmeldung:
**12.10.2022 Patentblatt 2022/41**

(73) Patentinhaber: **Estino GmbH**
**37269 Eschwege (DE)**

(72) Erfinder:
- **RIEBE, Jakob**
  **01069 Dresden (DE)**
- **GRIESING, Andreas**
  **01099 Dresden (DE)**
- **LANGER, Sebastian**
  **01307 Dresden (DE)**

(74) Vertreter: **Liedtke & Partner Patentanwälte**
**Gerhart-Hauptmann-Straße 10/11**
**99096 Erfurt (DE)**

(56) Entgegenhaltungen:
**DE-A1- 102005 004 023**

EP 4 070 067 B1

**Beschreibung**

Die Erfindung betrifft ein Verfahren und eine Vorrichtung zur Ermittlung eines Schädigungszustands von Bauteilen.

Aus dem Stand der Technik ist, wie in der DE 100 60 694 A1 beschrieben, ein Verfahren zur Betriebszustandserfassung von Verbrennungsmotoren von Kraftfahrzeugen bekannt. In diesem Verfahren werden Messgrößen und Ereignisse des Betriebs des Kraftfahrzeugs erfasst und daraus Basisgrößen gebildet. Weiterhin werden Klassiergrößen aus Verweilzeiten von jeweils zwei Messgrößen in Form von Verbundklassierungen gebildet. Sowohl die Basisgrößen als auch die Verbundklassiergrößen werden in einem Speicher gespeichert und als entsprechende Signale zum Abruf bereitgestellt. Auf der Basis der so gewonnenen Informationen erfolgt eine geeignete Bewertung mit dem Ziel der rechnerischen Ermittlung einer Soll-Bewertungsgröße für zum Beispiel den Verbrauch eines Betriebsstoffes wie Motoröl und Kraftstoff und ein entsprechender Vergleich mit einem Verbrauchsmesswert, welcher den Rückschluss auf den Verschleißzustand des Verbrennungsmotors oder von Komponenten des Verbrennungsmotors erlaubt.

In der DE 10 2005 004 023 A1 wird ein Verfahren zur Beschreibung des phänomenologischen Zusammenhangs zwischen der schädigenden Wirkung von Belastungs- bzw. Beanspruchungsgrößen an einer Konstruktion unter Betriebsbedingungen und der schädigenden Wirkung von an dieser Konstruktion wirkenden Einflussgrößen beschrieben. In diesem Verfahren wird die Konstruktion einem Testbetrieb mit den maßgeblichen, unterschiedlichen Betriebsbedingungen und -arten unterworfen. Im Testbetrieb werden mit geeigneten Sensoren Einflussgrößen und interessierende Belastungs- und Beanspruchungsgrößen gemessen. Aus im Testbetrieb aufgenommenen Signalen von drei Einflussgrößen wird mit geeigneten Filtern jeweils ein virtuelles Signal erzeugt. Alle durch die Filterung erzeugten virtuellen Signale werden zu mindestens einem definierten Zeitpunkt mit Zählverfahren gezählt und als virtuelle rechnerische schädigende Wirkungen an der Konstruktion bewertet. Aus im Testbetrieb aufgenommenen Signalen interessierende Beanspruchungs- und Belastungsgrößen in unterschiedlichen Bereichen der Konstruktion werden zu mindestens einem definierten Zeitpunkt mit Zählverfahren gezählt und in ihrer schädigenden Wirkung an der Konstruktion bewertet. Der phänomenologische Zusammenhang zwischen den virtuellen rechnerischen schädigenden Wirkungen aller verarbeiteten virtuellen Größen und den schädigenden Wirkungen aller interessierenden Beanspruchungs- und Belastungsgrößen wird mit geeigneten analytischen Ansätzen hergestellt. An der Konstruktion werden unter bestimmungsgemäßen Einsatzbedingungen in Langzeitmessungen nur die im Testbetrieb gemessenen Einflussgrößen erfasst. Diese erfassten Einflussgrößen werden wie im Testbetrieb gefiltert und gezählt und als virtuelle rechnerische schädigende Wirkungen bewertet. Aus den virtuellen rechnerischen schädigenden Wirkungen der Einflussgrößen der Langzeitmessungen werden die schädigenden Wirkungen aller interessierenden Belastungs- und Beanspruchungsgrößen wie im Testbetrieb unter Verwendung des hergestellten phänomenologischen Zusammenhangs rekonstruiert.

Der Erfindung liegt die Aufgabe zu Grunde, ein gegenüber dem Stand der Technik verbessertes Verfahren und eine gegenüber dem Stand der Technik verbesserte Vorrichtung zur Ermittlung eines Schädigungszustands von Bauteilen anzugeben.

Die Aufgabe wird erfindungsgemäß gelöst durch ein Verfahren zur Ermittlung eines Schädigungszustands von Bauteilen mit den Merkmalen des Anspruchs 1 und eine Vorrichtung zur Ermittlung eines Schädigungszustands von Bauteilen mit den Merkmalen des Anspruchs 15.

Vorteilhafte Ausgestaltungen der Erfindung sind Gegenstand der Unteransprüche.

In einem erfindungsgemäßen Verfahren zur Ermittlung eines Schädigungszustands von Bauteilen werden für ein Bauteil Schädigungszustände in Abhängigkeit von Betriebszuständen eines das Bauteil umfassenden Gesamtsystems ermittelt, indem während eines Betriebs des Gesamtsystems ein Zeitverlauf von Beanspruchungen und/oder Belastungen des Bauteils und ein Zeitverlauf von zur Ermittlung von Betriebszuständen relevanten Signalen des Gesamtsystems erfasst werden, aus den erfassten Signalen aufgetretene Betriebszustände des Gesamtsystems, insbesondere ein Zeitverlauf der aufgetretenen Betriebszustände, ermittelt werden, aus den erfassten Beanspruchungen und/oder Belastungen schädigende Ereignisse ermittelt und den Betriebszuständen zugeordnet werden, Beanspruchungskollektive und/oder Belastungskollektive je Betriebszustand ermittelt werden und anhand einer Dauer des jeweiligen Betriebszustands zeitnormierte Beanspruchungskollektive und/oder Belastungskollektive je Betriebszustand ermittelt werden. Dies, insbesondere die Erfassung des Zeitverlaufs der Beanspruchungen und/oder Belastungen des Bauteils und des Zeitverlaufs der zur Ermittlung von Betriebszuständen relevanten Signale des Gesamtsystems, wird beispielsweise während eines Tests oder mehrerer Tests, insbesondere während einer Testfahrt oder mehreren Testfahrten und/oder während eines oder mehrerer Prüfstandsversuche, und/oder während einer Simulation oder mehreren Simulationen durchgeführt. Die Erfassung des Zeitverlaufs der Beanspruchungen und/oder Belastungen des Bauteils, insbesondere die Erfassung der Beanspruchungen und/oder Belastungen des Bauteils, erfolgt dabei insbesondere mittels einer entsprechenden Einheit zur Erfassung der Beanspruchungen und/oder Belastungen des Bauteils, insbesondere mittels einer Sensorik, beispielsweise umfassend mindestens einen Sensor oder mehrerer Sensoren, insbesondere am Bauteil, d. h. diese Sensorik bildet vorteilhafterweise diese Einheit zur Erfassung der Beanspruchungen und/oder Belastungen des Bauteils. Diese Sensorik ist dabei zur Erfassung der Beanspruchungen und/oder Belastungen des Bauteils ausgebildet und eingerichtet und zweckmäßigerweise am Bauteil angeordnet. Die Testfahrt oder die jeweilige Testfahrt muss dabei nicht speziell vorgegeben sein und entsprechend einer solchen Vorgabe durchgeführt werden, um speziell vorgegebene Betriebszustände zu erreichen, sondern es werden aufgetretene Betriebszustände, insbesondere ein Zeitverlauf der aufgetretenen Betriebszustände, aus dem Zeitverlauf der zur Ermittlung von Betriebszuständen relevanten erfassten Signalen des Gesamtsystems ermittelt. Somit können auch derartige Tests, insbesondere Testfahrten, beispielsweise auch während eines normalen Betriebs des Gesamtsystems durchgeführt werden, wobei jedoch die Sensorik zur Erfassung der Beanspruchungen und/oder Belastungen des Bauteils, insbesondere von deren Zeitverlauf, erforderlich ist.

Die Zuordnung der schädigenden Ereignisse zu den Betriebszuständen erfolgt insbesondere derart, dass die aus den Beanspruchungen und/oder Belastungen hervorgehenden, beispielsweise mechanischen, insbesondere werkstoffmechanischen, schädigenden Ereignisse, z.B. Lastwechsel bei einer Rainflowklassierung, allen an ihrer Entstehung beteiligten Betriebszuständen anteilig zugeordnet werden. Dadurch wird eine automatisierte Zuordnung von Schädigungskennwerten zu Betriebszuständen ermöglicht. Lastwechsel sind eine mögliche Form schädigender Ereignisse.

Mittels dieser zeitnormierten Beanspruchungskollektive und/oder Belastungskollektive je Betriebszustand wird nun beispielsweise für das Bauteil in Abhängigkeit von aufgetretenen Betriebszuständen des Gesamtsystems der Schädigungszustand ermittelt und/oder es wird beispielsweise in Abhängigkeit von prognostizierten zukünftig auftretenden Betriebszuständen des das Bauteil umfassenden Gesamtsystems der zukünftige Schädigungszustand ermittelt und/oder es wird beispielsweise für ein gleichartig zu diesem Bauteil ausgebildetes weiteres Bauteil in Abhängigkeit von aufgetretenen Betriebszuständen eines dieses weitere Bauteil umfassenden und gleichartig zum Gesamtsystem ausgebildeten weiteren Gesamtsystems der Schädigungszustand ermittelt und/oder es wird beispielsweise in Abhängigkeit von prognostizierten zukünftig auftretenden Betriebszuständen des das weitere Bauteil umfassenden weiteren Gesamtsystems der zukünftige Schädigungszustand ermittelt. Dies, d. h. insbesondere die Ermittlung anhand tatsächlich aufgetretener Betriebszustände, kann vorteilhafterweise während eines normalen Betriebs des Gesamtsystems erfolgen, d. h. hierfür sind dann keine Testfahrten und Simulationen mehr erforderlich und insbesondere sind hierfür dann keine Sensoren zur Ermittlung der Beanspruchung und/oder Belastung am Bauteil mehr erforderlich. Die andere Variante der Ermittlung anhand zukünftiger prognostizierter Betriebszustände ist nicht an einen tatsächlichen Betrieb des Gesamtsystems gebunden, sondern geht von einem prognostizierten entsprechenden zukünftigen Betrieb des Gesamtsystems aus. Bei der Variante der Ermittlung anhand tatsächlich aufgetretener Betriebszustände werden diese Betriebszustände ebenfalls anhand des Zeitverlaufs der zur Ermittlung von Betriebszuständen relevanten Signale des Gesamtsystems erfasst, d. h. es wird auch hier während des Betriebs, hier insbesondere während des normalen Betriebs, des Gesamtsystems, der Zeitverlauf der zur Ermittlung von Betriebszuständen relevanten Signale des Gesamtsystems erfasst und aus den erfassten Signalen werden aufgetretene Betriebszustände des Gesamtsystems, insbesondere der Zeitverlauf der aufgetretenen Betriebszustände, ermittelt.

Wie aus der Formulierung der Erfassung des Zeitverlaufs der zur Ermittlung von Betriebszuständen relevanten Signale des Gesamtsystems und der Ermittlung der aufgetretenen Betriebszustände des Gesamtsystems, insbesondere des Zeitverlaufs der aufgetretenen Betriebszustände, bereits deutlich wird, werden somit vorteilhafterweise über einen gesamten erfassten Zeitverlauf kontinuierlich Betriebszustände ermittelt, d. h. jeder Zeitpunkt des Betriebs des Gesamtsystems, in welchem zur Ermittlung von Betriebszuständen relevante Signale des Gesamtsystems ermittelt wurden, wird einem jeweiligen Betriebszustand zugeordnet. Der Betrieb des Gesamtsystems ist somit vorteilhafterweise ein fortlaufender Ablauf von Betriebszuständen. Zu jedem Zeitpunkt ist exakt ein Betriebszustand aktiv, nämlich derjenige Zustand, der aus den jeweils aktuellen zur Ermittlung von Betriebszuständen relevanten Signalen des Gesamtsystems hervorgeht.

Zusammengefasst werden somit in einem ersten Verfahrensbestandteil anhand des Zeitverlaufs von Beanspruchungen und/oder Belastungen und der Zeitverläufe von zur Ermittlung von Betriebszuständen relevanten Signalen zeitnormierte Beanspruchungskollektive und/oder Belastungskollektive für Betriebszustände ermittelt und in einem zweiten Verfahrensbestandteil, ausgehend von den im ersten Verfahrensbestandteil ermittelten zeitnormierten Beanspruchungskollektiven und/oder zeitnormierten Belastungskollektiven je Betriebszustand und den nun auftretenden Betriebszuständen, der Schädigungszustand des Bauteils ermittelt. Dieser zweite Verfahrensbestandteil kann während des normalen Betriebs des Gesamtsystems durchgeführt werden, insbesondere ohne das Gesamtsystem mit zusätzlicher Sensorik zur Erfassung des Zeitverlaufs von Beanspruchungen und/oder Belastungen ausstatten zu müssen.

Das Gesamtsystem ist beispielsweise ein Fahrzeug, eine Maschine oder ein anderes ausgebildetes Gesamtsystem.

Die Ermittlung der Beanspruchungen und/oder Belastungen ist nur während des Zeitraums der Bestimmung der zeitnormierten Beanspruchungskollektive und/oder Belastungskollektive, somit nur während des Ablaufs oben erwähnten ersten Verfahrensbestandteils, zwingend erforderlich, d. h. die Erfassung der Beanspruchungen und/oder Belastungen ist im normalen Betrieb nicht notwendig. Aus diesem Grund kann die Erfassung, insbesondere Messung, der Beanspruchungen und/oder Belastungen während der Ermittlung zeitnormierter Beanspruchungskollektive und/oder Belastungskollektive vorzugsweise mittels der oben bereits erwähnten zusätzlichen Sensorik erfolgen, die nicht standardmäßig im Gesamtsystem enthalten ist, d. h. mittels Sensorik, die im normalen Betrieb des Gesamtsystems nicht zur Verfügung stehen muss. Diese, insbesondere zusätzliche, Sensorik umfasst beispielsweise einen oder mehrere Dehnungsmessstreifen, Kraftsensoren und/oder Temperatursensoren. Die zur Ermittlung von Betriebszuständen relevanten Signale des Gesamtsystems werden während der Ermittlung der zeitnormierten Beanspruchungskollektive und/oder Belastungskollektive, d. h. im oben erwähnten ersten Verfahrensbestandteil, und vorteilhafterweise auch im normalen Betrieb des Gesamtsystems, d. h. im oben erwähnten zweiten Verfahrensbestandteil, erfasst und verwendet, im zweiten Verfahrensbestandteil insbesondere zur Ermittlung der aufgetretenen Betriebszustände des Gesamtsystems, um in Abhängigkeit davon den Schädigungszustand zu ermitteln, zumindest dann, wenn diese Betriebszustände nicht als zukünftig auftretende Betriebszustände prognostiziert werden, wie oben als Alternative beschrieben. Solche für die Ermittlung von Betriebszuständen relevanten Signale des Gesamtsystems können beispielsweise eine Fahrgeschwindigkeit oder eine Stellung von Schaltern sein, insbesondere für den Fall, dass das Gesamtsystem ein Fahrzeug ist.

Alternativ oder zusätzlich kann die Ermittlung der zeitnormierten Beanspruchungskollektive und/oder Belastungskollektive vollständig oder teilweise auf Basis eines simulierten Betriebs des Gesamtsystems durchgeführt werden, bei dem ebenfalls die Beanspruchungen und/oder Belastungen und insbesondere die für die Ermittlung von Betriebszuständen relevanten Signale des Gesamtsystems, welche auch im normalen Betrieb des Gesamtsystems verfügbar sind, simuliert werden.

Mittels des erfindungsgemäßen Verfahrens werden die schädigenden Ereignisse in Abhängigkeit von den aufgetretenen Betriebszuständen des Gesamtsystems bestimmt. Dadurch wird es ermöglicht, einen Schädigungszustand des Bauteils oder eines gleichartigen weiteren Bauteils ausschließlich anhand der aufgetretenen Betriebszustände des jeweiligen Bauteils und deren jeweiliger Dauer zu bestimmen oder einen Schädigungszustand des Bauteils oder eines gleichartigen weiteren Bauteils ausschließlich anhand prognostizierter zukünftiger Betriebszustände des jeweiligen Bauteils und deren jeweiliger Dauer zu prognostizieren, denn die erfindungsgemäße Lösung ermöglicht die Rekonstruktion eines Beanspruchungskollektivs und/oder Belastungskollektivs für das jeweilige konkrete Bauteil allein aus der Erfassung der Betriebszustände des Gesamtsystems, welches dieses Bauteil umfasst. Das erfindungsgemäße Verfahren kann somit beispielsweise zu einem Online-Monitoring des aktuellen Schädigungszustandes des Bauteils genutzt werden, ohne dass am Bauteil selbst der Beanspruchungsverlauf und/oder Belastungsverlauf ermittelt werden muss. Voraussetzung für diese Rekonstruktion ist, wie oben bereits beschrieben, die vorherige Ermittlung zeitnormierter Beanspruchungs- und/oder Belastungskollektive für jeden auftretenden Betriebszustand am gleichen und/oder an einem weiteren gleichartig ausgebildeten Bauteil eines gleichartig ausgebildeten weiteren Gesamtsystems, welche anhand des erfindungsgemäßen Vorgehens, insbesondere gemäß dem oben beschriebenen ersten Verfahrensbestandteil, ermittelt wurden und für die Rekonstruktion verwendet werden.

Das erfindungsgemäße Verfahren stellt insbesondere eine betriebszustandsabhängige Beanspruchungsanalyse und/oder Belastungsanalyse zur Rekonstruktion zukünftiger und/oder historischer Beanspruchungskollektive und/oder Belastungskollektive eines Bauteils bereit. Es werden betriebszustandsabhängige Beanspruchungskollektive und/oder Belastungskollektive ermittelt und daraus können zukünftige und/oder historische Beanspruchungskollektive und/oder Belastungskollektive zur Beschreibung des aktuellen Schädigungszustandes eines Bauteils ermittelt werden, ohne hierfür eine Beanspruchungsmessung und/oder Belastungsmessung an diesem Bauteil vornehmen zu müssen.

Das Verfahren ist auf Bauteile anwendbar, denen auf Basis eines Beanspruchungs-Zeit-Verlaufs und/oder Belastungs-Zeit-Verlaufs, d. h. auf Basis eines erfassten Zeitverlaufs von Beanspruchungen und/oder Belastungen, ein Beanspruchungskollektiv und/oder Belastungskollektiv zugewiesen werden kann. Das Beanspruchungskollektiv und/oder Belastungskollektiv muss hierbei durch die Bestimmung schädigungsrelevanter Ereignisse aus dem Beanspruchungs-Zeit-Verlauf bzw. aus dem Belastungs-Zeit-Verlauf ermittelt werden. Insbesondere richtet sich die Definition eines schädigungsrelevanten Ereignisses nach dem grundlegenden Schädigungsmechanismus für ein konkret betrachtetes Bauteil und dem jeweils verwendeten Verfahren zur Beschreibung des aktuellen Schädigungszustands infolge des Auftretens schädigungsrelevanter Ereignisse. Beispielsweise sind schädigungsrelevante Ereignisse für den Schädigungsmechanismus "Mechanische Werkstoffermüdung infolge zyklischer Beanspruchung und/oder Belastung" in der Beschreibung nach dem Nennspannungskonzept der Betriebsfestigkeit als sogenannte Lastwechsel definiert, wobei dem Fachmann zur Beschreibung dieses und/oder weiterer Schädigungsmechanismen weitere Verfahren bekannt sind, mit den jeweiligen eigenen Definitionen für schädigungsrelevante Ereignisse.

Die Beanspruchung und/oder Belastung kann zum Beispiel eine mechanische Spannung, eine der mechanischen Spannung proportionale Größe, eine Temperatur, ein Druck, eine elektrische Spannung, ein elektrischer Strom oder eine andere physikalische Größe sein. Insbesondere sind mit Beanspruchungen und/oder Belastungen physikalische Messgrößen gemeint, die abhängig von dem für das Bauteil relevanten Schädigungsmechanismus direkt schädigungsrelevante Messgrößen darstellen und/oder eine oder mehrere Messgrößen bezeichnen, die über mindestens ein Berechnungs- und/oder Simulationsmodell in eine direkt schädigungsrelevante Messgröße umrechenbar sind.

Das Prinzip des erfindungsgemäßen Verfahrens beruht auf der Zuordnung der Betriebszustände zum zugehörigen Beanspruchungsmesswert und/oder Belastungsmesswert und der Erzeugung eines jeweils individuellen Satzes an Schädigungsmerkmalen, d. h. eines Satzes schädigender Ereignisse.

Ein jeweiliges schädigendes Ereignis wird dabei vorteilhafterweise anteilig auf die daran beteiligten Betriebszustände aufgeteilt.

In einer möglichen Ausführungsform des Verfahrens wird ein schädigendes Ereignis, insbesondere ein jeweiliges schädigendes Ereignis, zu gleichen Teilen auf die daran beteiligten Betriebszustände aufgeteilt.

In einer weiteren, insbesondere alternativen, möglichen Ausführungsform des Verfahrens erfolgt die Aufteilung des jeweiligen schädigenden Ereignisses auf die daran beteiligten Betriebszustände gewichtet zu den an seiner Entstehung beteiligten Betriebszuständen. Dabei wird in einer möglichen Ausführungsform des Verfahrens das Gewicht des jeweiligen Betriebszustands bestimmt, indem der Zeitraum, während dem das schädigende Ereignis eingetreten ist, und die gesamte Dauer des jeweiligen Betriebszustands innerhalb dieses Zeitraums ermittelt wird und sich das Gewicht als das Verhältnis der gesamten Betriebszustandsdauer des jeweiligen Betriebszustands zur Gesamtdauer des schädigenden Ereignisses ergibt. Beispielsweise kann der Zeitraum für die Gesamtdauer eines schädigenden Ereignisses nach dem Nennspannungskonzept der Betriebsfestigkeit als der Zeitraum zwischen dem ersten und letzten Umkehrpunkt eines Lastwechsels betrachtet werden oder alternativ als der Zeitraum zwischen dem ersten und letzten Umkehrpunkt eines Lastwechsels unter Ausschluss der Zeiträume, die dem Auftreten eingeschlossener Lastwechsel zuzuschreiben sind. Die Summe der Gewichte aller Betriebszustände muss dabei wieder der ursprünglichen Häufigkeit des schädigenden Ereignisses entsprechen.

Die Aufteilung des jeweiligen schädigenden Ereignisses entsprechend den oben beschriebenen Ausführungsformen des Verfahrens kann auch anhand folgender Formeln verdeutlicht werden:

Für die gewichtete Aufteilung gilt:

$$H_i = G_i \cdot H_0 \qquad (1)$$

Dabei ist $H_i$ die resultierende Häufigkeit des schädigenden Ereignisses im Betriebszustand i, $G_i$ das Gewicht für den Betriebszustand i und $H_0$ die ursprüngliche Häufigkeit des schädigenden Ereignisses vor der Aufteilung.

Die Bedingung ist, dass gilt:

$$\Sigma_{i=1}^{n_B} G_i = 1 \qquad (2)$$

wobei $n_B$ die Anzahl der Betriebszustände ist.

Für eine Aufteilung gewichtet nach charakteristischen Punkten (im Fall von Lastwechseln deren Umkehrpunkte) gilt:

$$G_i = \frac{N_i}{N_0} \qquad (3)$$

Dabei ist $N_i$ die Anzahl charakteristischer Messpunkte in Betriebszustand i und $N_0$ ist die Anzahl charakteristischer Messpunkte für das gesamte schädigende Ereignis.

Für eine zeitlich gewichtete Aufteilung gilt:

$$G_i = \frac{t_i}{t_0} \qquad (4)$$

Dabei ist $t_i$ die Verweildauer des Betriebszustands i während des schädigenden Ereignisses und $t_0$ ist die gesamte Dauer des schädigenden Ereignisses.

Für eine gewichtete Aufteilung nach der inkrementellen Änderung der Beanspruchung und/oder Belastung gilt:

$$G_i = \frac{\Delta B_i}{\Delta B_0} \qquad (5)$$

Dabei ist $\Delta B_i$ das akkumulierte Inkrement der Beanspruchung und/oder Belastung im Betriebszustand i und $\Delta B_0$ ist das gesamte Inkrement der Beanspruchung während des schädigenden Ereignisses.

Um den Zeitverlauf der aufgetretenen Betriebszustände zu erhalten, wird vorteilhafterweise eine Klasseneinteilung der Signale des Gesamtsystems und dadurch eine Definition möglicher Betriebszustände durchgeführt. D. h. die Betriebszustände werden aus den erfassten Signalen des Gesamtsystems ermittelt, insbesondere anhand von Signalen, die auch im normalen Betrieb des Gesamtsystems zur Verfügung stehen. Bei der Klasseneinteilung wird beispielsweise der Wertebereich aller zu betrachtenden Signale des Gesamtsystems für jedes Signal individuell und vollständig in Klassen, d. h. Intervalle, eingeteilt, wobei anschließend jede mögliche Kombination der Klassen aller betrachteten Signale des Gesamtsystems als ein Betriebszustand definiert wird, d. h. die Definition möglicher Betriebszustände durchgeführt wird. Dies kann somit beispielsweise auch während eines normalen Betriebs und/oder nach dem normalen Betrieb des Gesamtsystems erfolgen. Eine Vorgabe von Betriebszuständen, welche das Gesamtsystem durchlaufen muss, d. h. in Form einer standardisierten Testfahrt, ist somit nicht notwendig. Das hier beschriebene Verfahren ist somit wesentlich flexibler und kann beispielsweise auch in einem normalen Kundenbetrieb von Gesamtsystemen, beispielsweise Fahrzeugen, eingesetzt werden.

Die Dauer des jeweiligen Betriebszustands wird vorteilhafterweise bestimmt, indem für die Signale des Gesamtsystems mit den Klassen, in welche sie eingeteilt sind, ein mehrdimensionales Histogramm gebildet wird, anhand dessen die Dauer des jeweiligen Betriebszustandes bestimmt wird. Die Ermittlung des Histogramms erfolgt vorteilhafterweise über eine mehrparametrische, bezogene Momentanwertzählung. Das heißt, zu jedem Messpunkt, an welchem ein Beanspruchungsmesswert und/oder Belastungsmesswert erfasst wurde, werden die Werte aller zur Ermittlung der Betriebszustände relevanten erfassten Signale des Gesamtsystems (d. h. der erfassten Signale mit Ausnahme der Beanspruchung und/oder Belastung) ermittelt und es werden die zugehörigen Klassen der Signale bestimmt. Zu jeder Kombination der Klassen existiert genau ein Element im Histogramm, dessen Zählwert um das Zeitintervall zum vorherigen Messpunkt erhöht wird. Jedes Element des Histogramms stellt dabei formal einen Betriebszustand dar. Das Ergebnis ist somit eine Dauer der Betriebszustände des Gesamtsystems.

Alternativ zum in den beiden vorangegangenen Absätzen beschriebenen Vorgehen, d. h. alternativ zur beschriebenen Klasseneinteilung zur Definition möglicher Betriebszustände, um den Zeitverlauf der aufgetretenen Betriebszustände zu erhalten, und zur beschriebenen Bestimmung der Dauer des jeweiligen Betriebszustands, können die Betriebszustände beispielsweise auch mit Methoden der künstlichen Intelligenz aus den zur Ermittlung von Betriebszuständen relevanten Signalen bestimmt werden.

Für die Ermittlung der Dauer der Betriebszustände im normalen Betrieb des Gesamtsystems, d. h. insbesondere für den Betrieb, in dem keine Ermittlung von Beanspruchungen und/oder Belastungen erfolgen muss, somit insbesondere für den oben erwähnten zweiten Verfahrensbestandteil, kommt vorzugsweise eine einparametrische Verweildauerzählung zum Einsatz, bei der aus dem Betriebszustand-Zeit-Verlauf, welcher beispielweise nach einem der zuvor beschriebenen Verfahren ermittelt wurde, die Verweildauer des Gesamtsystems in den einzelnen Betriebszuständen bestimmt wird, wodurch eine Dauer der Betriebszustände des Gesamtsystems im normalen Betrieb erhalten wird.

Die Ermittlung der schädigenden Ereignisse je Betriebszustand erfolgt vorteilhafterweise, indem aus den erfassten Beanspruchungen und/oder Belastungen im Zeitbereich, mittels eines für die vorliegende Beanspruchungsgröße und/oder Belastungsgröße geeigneten Zählverfahrens zur Überführung der Größe aus dem Zeitbereich in den Häufigkeitsbereich, im Häufigkeitsbereich schädigende Ereignisse ermittelt und den Betriebszuständen zugeordnet werden. Hierzu wird vorteilhafterweise eine Beanspruchungsanalyse und/oder Belastungsanalyse durchgeführt, in der die schädigenden Ereignisse nach einem geeigneten Zählverfahren ermittelt werden und den ermittelten schädigenden Ereignissen ein quantitatives Merkmal zum Schädigungsbeitrag derselben zugewiesen wird. Dabei kann entweder zunächst die Ermittlung aller schädigenden Ereignisse erfolgen, während in einem nächsten Schritt allen Ereignissen der Schädigungsbeitrag zugewiesen wird, oder direkt im Anschluss an die Ermittlung eines schädigenden Ereignisses die Zuweisung des Schädigungsbeitrags für dieses Ereignis erfolgen, bevor weitere Ereignisse ermittelt werden.

In der Beanspruchungsanalyse und/oder Belastungsanalyse, insbesondere nach dem Nennspannungskonzept oder dem Kerbspannungskonzept der Betriebsfestigkeit, wird vorteilhafterweise jeder Beanspruchung und/oder Belastung ihr zugehöriger Betriebszustand auf Basis der Signale des Gesamtsystems zugeordnet, eine Rainflowklassierung der Beanspruchungen und/oder Belastungen zur Bestimmung des Auftretens schädigender Ereignisse in Form von Lastwechseln durchgeführt, für jeden Betriebszustand eine separate Rainflowmatrix erzeugt, in der gezählte Lastwechsel anteilig auf die an der Entstehung der Lastwechsel jeweils beteiligten Betriebszuständen aufgeteilt werden. Dies erfolgt beispielsweise, indem der jeweilige Lastwechsel in zwei halbe Lastwechsel aufgeteilt und jeweils in den Rainflowmatrizen der zu seinen Umkehrpunkten gehörigen Betriebszustände gespeichert wird. Für eine Berücksichtigung eines Residuums wird der jeweilige Lastwechsel entsprechend einer Art der Berücksichtigung, insbesondere ob kein Lastwechsel, ein halber Lastwechsel oder ein ganzer Lastwechsel vorliegt, auf die Rainflowmatrizen der beteiligten Betriebszustände aufgeteilt, insbesondere anteilig, in einer möglichen Ausführungsform des Verfahrens zu je 50%, auf die Rainflowmatrizen der beteiligten Betriebszustände aufgeteilt. Die zugehörigen Umkehrpunkte sind insbesondere die ersten beiden Umkehrpunkte des Lastwechsels, welche in einer klassischen Rainflowklassierung nach der Zählung eines Lastwechsels aus dem Beanspruchungs-Zeit-Verlauf und/oder dem Belastungs-Zeit-Verlauf entfernt werden.

In einer möglichen weiteren Ausführungsform des Verfahrens kann die Aufteilung der jeweiligen Lastwechsel und/oder der Residuen auf die beteiligten Betriebszustände nach einem der oben beschriebenen Verfahren zur zeitlichen Wichtung von schädigenden Ereignissen erfolgen. Vorteilhafterweise wird hierbei in der Beanspruchungsanalyse und/oder Belastungsanalyse für jeden Betriebszustand eine separate Rainflowmatrix erzeugt, in der gezählte Lastwechsel anteilig auf die an der Entstehung der Lastwechsel jeweils beteiligten Betriebszuständen aufgeteilt werden, indem der jeweilige Lastwechsel gewichtet zu den an seiner Entstehung beteiligten Betriebszuständen aufgeteilt und entsprechend in den Rainflowmatrizen dieser Betriebszustände gespeichert wird. Für eine Berücksichtigung eines Residuums wird der jeweilige Lastwechsel entsprechend einer Art der Berücksichtigung, insbesondere ob kein Lastwechsel, ein halber Lastwechsel oder ein ganzer Lastwechsel vorliegt, gewichtet zu den an seiner Entstehung beteiligten Betriebszuständen auf die Rainflowmatrizen der beteiligten Betriebszustände aufgeteilt.

Das Gewicht des jeweiligen Betriebszustands wird beispielsweise bestimmt, indem ein Zeitraum, während dem der jeweilige Lastwechsel eingetreten ist, und eine gesamte Dauer des jeweiligen Betriebszustands innerhalb dieses Zeitraums ermittelt wird und sich das Gewicht als das Verhältnis der gesamten Betriebszustandsdauer des jeweiligen Betriebszustands zur Gesamtdauer des jeweiligen Lastwechsels ergibt. Beispielsweise kann der Zeitraum für die Gesamtdauer des jeweiligen Lastwechsels nach dem Nennspannungskonzept als der Zeitraum zwischen dem ersten und letzten Umkehrpunkt des Lastwechsels betrachtet werden oder alternativ als der Zeitraum zwischen dem ersten und letzten Umkehrpunkt des Lastwechsels unter Ausschluss der Zeiträume, die dem Auftreten eingeschlossener Lastwechsel zuzuschreiben sind. Die Summe der Gewichte aller Betriebszustände muss dabei wieder der ursprünglichen Häufigkeit des Lastwechsels entsprechen.

In einer möglichen weiteren Ausführungsform wird das Gewicht des jeweiligen Betriebszustands bestimmt als das Verhältnis der akkumulierten Beträge der Beanspruchungs- und/oder Belastungsinkremente der zugehörigen Lastwechsel in dem jeweiligen Betriebszustand zum gesamten Beanspruchungs- und/oder Belastungsinkrement der zugehörigen Lastwechsel, wobei sich das gesamte Beanspruchungs- und/oder Belastungsinkrement der zugehörigen Lastwechsel aus der doppelten Differenz von oberen zu unteren Beanspruchungs- bzw. Belastungsmesswerten der Umkehrpunkte der zugehörigen Lastwechsel ergibt. In dieser Ausführungsform des Verfahrens kann somit die Aufteilung der jeweiligen Lastwechsel und/oder der Residuen auf die beteiligten Betriebszustände anhand der akkumulierten Beträge der Beanspruchungs- und/oder Belastungsinkremente erfolgen, wobei das gesamte Beanspruchungs- und/oder Belastungsinkrement eines Lastwechsels der doppelten Differenz von oberen zu unteren Beanspruchungsbeziehungsweise Belastungsmesswerten der Umkehrpunkte entspricht und das Gewicht eines Betriebszustandes als das Verhältnis der akkumulierten Beträge der Beanspruchungs- und/oder Belastungsinkremente, welche im jeweiligen Betriebszustand aufgetreten sind, zum gesamten Beanspruchungs- und/oder Belastungsinkrement des Lastwechsels entspricht. Dieses Vorgehen entspricht einer energetisch motivierten Gewichtung der Betriebszustände anhand der anteilig verrichteten mechanischen Arbeit innerhalb eines Betriebszustandes.

Vorteilhafterweise wird somit bei dieser Ausführungsform des Verfahrens in der Beanspruchungsanalyse und/oder Belastungsanalyse für jeden Betriebszustand eine separate Rainflowmatrix erzeugt, in der gezählte Lastwechsel anhand der akkumulierten Beträge von Beanspruchungs- und/oder Belastungsinkrementen auf die an der Entstehung der Lastwechsel jeweils beteiligten Betriebszustände aufgeteilt werden, wobei das gesamte Beanspruchungs- und/oder Belastungsinkrement eines jeweiligen Lastwechsels der doppelten Differenz von oberen zu unteren Beanspruchungs- bzw. Belastungsmesswerten von Umkehrpunkten des Lastwechsels entspricht und das Gewicht des jeweiligen Betriebszustandes als Verhältnis der akkumulierten Beträge der Beanspruchungs- und/oder Belastungsinkremente, welche im jeweiligen Betriebszustand aufgetreten sind, zum gesamten Beanspruchungs- und/oder Belastungsinkrement des Lastwechsels entspricht. Für eine Berücksichtigung eines Residuums wird der jeweilige Lastwechsel entsprechend einer Art der Berücksichtigung, insbesondere ob kein Lastwechsel, ein halber Lastwechsel oder ein ganzer Lastwechsel vorliegt, anhand akkumulierter Beträge der Beanspruchungs- und/oder Belastungsinkremente auf die Rainflowmatrizen der beteiligten Betriebszustände aufgeteilt, wobei das gesamte Beanspruchungs- und/oder Belastungsinkrement eines jeweiligen Lastwechsels der doppelten Differenz von oberen zu unteren Beanspruchungs- bzw. Belastungsmesswerten der Umkehrpunkte des Lastwechsels entspricht und das Gewicht des Betriebszustandes als Verhältnis der akkumulierten Beträge der Beanspruchungs- und/oder Belastungsinkremente, welche im jeweiligen Betriebszustand aufgetreten sind, zum gesamten Beanspruchungs- und/oder Belastungsinkrement des Lastwechsels entspricht. Die Summe aller Gewichte ist somit stets gleich 1 und die Gewichte werden, wie erwähnt, mit der ursprünglichen Häufigkeit multipliziert, d. h. 0, ½ oder 1 im Fall des Residuums je nach Art der Berücksichtigung des Residuums, insbesondere ob als kein Lastwechsel, ein halber Lastwechsel oder ein Lastwechsel, und immer 1 im Fall eines regulären Lastwechsels. Dies gilt insbesondere unabhängig davon, worum es sich bei schädigenden Ereignissen handelt.

Dies lässt sich auch mit Formel (5) ausdrücken, wobei hier für das gesamte Beanspruchungs- und/oder Belastungsinkrement $\Delta B_0$ gilt:

$$\Delta B_0 = 2(B_{Ob} - B_{Ub}) \tag{6}$$

Das Gewicht $G_i$ des Betriebszustands i folgt damit aus Formel (5) und (6) zu:

$$G_i = \frac{\Delta B_i}{2(B_{Ob} - B_{Ub})} \tag{7}$$

Dabei ist $G_i$ das Gewicht des Betriebszustands i, $\Delta B_i$ sind die akkumulierten Beträge der Beanspruchungsinkremente und/oder Belastungsinkremente, $B_{Ob}$ ist der obere Beanspruchungsmesswert und/oder Belastungsmesswert und $B_{Ub}$ ist der untere Beanspruchungsmesswert und/oder Belastungsmesswert.

In dieser Variante wäre $H_0=1$ für reguläre Lastwechsel und $H_0 \in \{0,0.5,1\}$ für Residuen gemäß kein/halber/ganzer Lastwechsel.

Die Beanspruchungskollektive je Betriebszustand werden vorteilhafterweise ermittelt, indem die Rainflowmatrizen für jeden Betriebszustand individuell ausgewertet werden, insbesondere indem die erfassten Lastwechsel extrahiert werden.

In einem alternativen Vorgehen wird vorteilhafterweise jeder Beanspruchung und/oder Belastung in Form einer mechanischen Spannung oder einer mechanischen Dehnung ihr zugehöriger Betriebszustand auf Basis der Signale des Gesamtsystems zugeordnet und eine Rainflowklassierung der Beanspruchungen und/oder Belastungen zur Bestimmung des Auftretens schädigender Ereignisse in Form von Lastwechseln durchgeführt. Dabei werden die ermittelten Lastwechsel direkt nach ihrer Ermittlung und/oder unter Berücksichtigung der Reihenfolge ihres Auftretens in einen Schädigungsparameter, insbesondere nach dem Kerbdehnungskonzept der Betriebsfestigkeit, umgerechnet und den am zugehörigen Lastwechsel beteiligten Betriebszuständen (hier insbesondere Betriebszustände zugehörig zu den Umkehrpunkten des Lastwechsels) jeweils als Schädigungsparameter, insbesondere anteilig, in einer möglichen Ausführungsform des Verfahrens mit der Hälfte der ursprünglichen Häufigkeit - d. h. ½ - zu den Schädigungsparameterkollektiven der zugehörigen Betriebszustände, hinzugefügt. Die Schädigungsparameterkollektive je Betriebszustand stellen hierbei die Beanspruchungskollektive und/oder Belastungskollektive je Betriebszustand dar.

In einer weiteren möglichen Ausführungsform des Verfahrens kann die Aufteilung der Schädigungsparameter zu den Betriebszuständen gewichtet, vorzugsweise unter Verwendung einer der oben beschriebenen Methoden zur Ermittlung der Gewichte schädigender Ereignisse oder Lastwechsel, erfolgen, insbesondere wie in den Formeln (1) bis (7) beschrieben.

Beispielsweise werden somit in der Beanspruchungsanalyse und/oder Belastungsanalyse die ermittelten Lastwechsel direkt nach ihrer Ermittlung und/oder unter Berücksichtigung der Reihenfolge ihres Auftretens in einen Schädigungsparameter umgerechnet und jeweils als Schädigungsparameter, gewichtet zu den an seiner Entstehung beteiligten Betriebszuständen aufgeteilt, zu Schädigungsparameterkollektiven der am zugehörigen Lastwechsel beteiligten Betriebszustände hinzugefügt, wobei die Schädigungsparameterkollektive je Betriebszustand die Beanspruchungskollektive und/oder Belastungskollektive je Betriebszustand darstellen.

Das Gewicht des jeweiligen Betriebszustands wird dabei bestimmt, indem ein Zeitraum, während dem der jeweilige Lastwechsel eingetreten ist, und eine gesamte Dauer des jeweiligen Betriebszustands innerhalb dieses Zeitraums ermittelt wird und sich das Gewicht als das Verhältnis der gesamten Betriebszustandsdauer des jeweiligen Betriebszustands zur Gesamtdauer des jeweiligen Lastwechsels ergibt. In einer möglichen weiteren Ausführungsform des Verfahrens wird das Gewicht des jeweiligen Betriebszustands bestimmt als das Verhältnis der akkumulierten Beträge der Beanspruchungs- und/oder Belastungsinkremente der zugehörigen Lastwechsel in dem jeweiligen Betriebszustand zum gesamten Beanspruchungs- und/oder Belastungsinkrement der zugehörigen Lastwechsel, wobei sich das gesamte Beanspruchungs- und/oder Belastungsinkrement der zugehörigen Lastwechsel aus der doppelten Differenz von oberen zu unteren Beanspruchungs- bzw. Belastungsmesswerten der Umkehrpunkte der zugehörigen Lastwechsel ergibt. In dieser Ausführungsform kann somit die Aufteilung der Schädigungsparameter auf die beteiligten Betriebszustände anhand der akkumulierten Beträge der Beanspruchungs- und/oder Belastungsinkremente der zugrundeliegenden Lastwechsel erfolgen, wobei das gesamte Beanspruchungs- und/oder Belastungsinkrement eines Lastwechsels der doppelten Differenz von oberen zu unteren Beanspruchungs- beziehungsweise Belastungsmesswerten der Umkehrpunkte entspricht und das Gewicht eines Betriebszustandes als das Verhältnis der akkumulierten Beträge der Beanspruchungs- und/oder Belastungsinkremente des Lastwechsels, welche im jeweiligen Betriebszustand aufgetreten sind, zum gesamten Beanspruchungs- und/oder Belastungsinkrement des Lastwechsels entspricht. Dieses Vorgehen entspricht einer energetisch motivierten Gewichtung der Betriebszustände anhand der anteilig verrichteten mechanischen Arbeit innerhalb eines Betriebszustandes an einem Schädigungsparameter.

Dies ist beispielsweise bereits in den obigen Formeln (1) bis (7) für schädigende Ereignisse angegeben, wobei es sich bei Lastwechseln um eine spezielle Form schädigender Ereignisse handelt.

Das erfindungsgemäße Verfahren kann somit verwendet werden, um ausgehend von einer für die Beschreibung des Schadensmechanismus geeigneten Beanspruchungsanalyse und/oder Belastungsanalyse nach dem jeweiligen Stand der Technik eine betriebszustandsabhängige Beanspruchungsanalyse und/oder eine betriebszustandsabhängige Belastungsanalyse durchzuführen, insbesondere, jedoch ohne Beschränkung der Allgemeinheit, eine Beanspruchungsanalyse und/oder Belastungsanalyse nach dem Nennspannungskonzept, dem Kerbspannungskonzept und/oder dem Kerbdehnungskonzept der Betriebsfestigkeit, wobei dem Fachmann weitere Verfahren der Beanspruchungsanalyse und/oder Belastungsanalyse in Abhängigkeit des maßgebenden Schädigungsmechanismus bekannt sind, bei denen basierend auf Beanspruchungs-Zeit-Verläufen und/oder Belastungs-Zeit-Verläufen schädigende Ereignisse zur Beschreibung eines Schädigungszustandes bestimmt werden, auf die das erfindungsgemäße Verfahren ebenfalls angewendet werden kann.

Die zeitnormierten Beanspruchungskollektive und/oder Belastungskollektive je Betriebszustand werden vorteilhafterweise ermittelt, indem die Beanspruchungskollektive und/oder Belastungskollektive je Betriebszustand in der Häufigkeit ihrer einzelnen Kollektivstufen auf die Dauer des zugehörigen Betriebszustandes normiert werden und/oder indem die Beanspruchungskollektive und/oder Belastungskollektive je Betriebszustand anhand der Dauer des zugehörigen Betriebszustandes normiert werden. Eine Kollektivstufe ist hierbei definiert als ein Schädigungsmerkmal mit einem den Schädigungsinhalt quantitativ beschreibenden Schädigungskennwert und der Häufigkeit des Auftretens schädigender Ereignisse mit diesem Schädigungskennwert. Beispielsweise ist eine Kollektivstufe im Sinne des Nennspannungskonzepts oder des Kerbspannungskonzepts der Betriebsfestigkeit durch das Schädigungsmerkmal Lastwechsel mit dem quantitativen Schädigungskennwert "Amplitude" und der Häufigkeit der Lastwechsel mit diesem Schädigungskennwert beschrieben. Alternativ kann eine Kollektivstufe nach dem Nennspannungskonzept auch als Eintrag in einer Rainflowmatrix gegeben sein, wobei der quantitative Schädigungskennwert dann durch die Zeilen- und Spaltennummer und die Häufigkeit als der entsprechende Zählwert des Matrixelements vorliegt. Im letzteren Fall ist eine Normierung des Beanspruchungskollektivs und/oder Belastungskollektivs gemäß eines dem Fachmann bekannten Verfahrens der Extrapolation von Rainflowmatrizen durchführbar.

In einer alternativen Ausführungsform kann die Normierung der Häufigkeit der einzelnen Kollektivstufen auch auf eine andere Größe erfolgen, beispielsweise eine zurückgelegte Entfernung bei beweglichen Gesamtsystemen und/oder eine bearbeitete Fläche bei Gesamtsystemen zur Bodenbearbeitung beispielsweise aus dem Bereich der Landmaschinentechnik, wodurch diese Beanspruchungskollektive und/oder Belastungskollektive respektive als wegnormiert und/oder flächennormiert bezeichnet werden. Die Ermittlung der Dauer der Betriebszustände wird dementsprechend ersetzt und/oder ergänzt durch die Ermittlung der zurückgelegten Entfernung und/oder die bearbeitete Fläche je Betriebszustand.

Das Verfahren kann beispielsweise mittels einer Vorrichtung durchgeführt werden, welche zum Beispiel direkt am Gesamtsystem, d. h. onboard, oder beispielsweise teilweise am Gesamtsystem und teilweise offboard, d. h. gesamtsystemextern, angeordnet ist. Gesamtsystemextern umfasst die Vorrichtung insbesondere eine Verarbeitungseinheit, zum Beispiel in Form eines Computers. Bei der vollständig am Gesamtsystem angeordneten Vorrichtung ist die Verarbeitungseinheit beispielsweise ein Steuergerät oder eine andere Rechnereinheit. Gesamtsystemextern kann das Verfahren beispielsweise auf Basis extern aufgezeichneter Daten, insbesondere Zeitverläufen der Beanspruchung und/oder Belastung des betrachteten Bauteils und den zur Bestimmung der Betriebszustände relevanten Signalen des Gesamtsystems, durchgeführt werden. Beispielsweise umfasst die Vorrichtung hierfür entsprechende Erfassungseinheiten am Gesamtsystem, welche diese Daten an eine externe Einheit, insbesondere an die Verarbeitungseinheit zur Aufzeichnung und Verarbeitung übertragen. Alternativ können diese Daten beispielsweise zunächst am Gesamtsystem aufgezeichnet und später zur Auswertung an die Verarbeitungseinheit übertragen werden. Die Datenübertragung kann beispielsweise kabellos, beispielsweise über Funk, oder kabelgebunden erfolgen.

Eine solche erfindungsgemäße Vorrichtung ist somit ausgebildet und eingerichtet zur Durchführung des Verfahrens.

Die Vorrichtung umfasst beispielsweise mindestens eine Einheit zur Erfassung der Beanspruchungen und/oder Belastungen des Bauteils, insbesondere die oben erwähnte Sensorik, mindestens eine Einheit zur Erfassung der zur Ermittlung von Betriebszuständen relevanten Signale des Gesamtsystems und mindestens eine Verarbeitungseinheit. Die Verarbeitungseinheit ist insbesondere ausgebildet und eingerichtet zur Durchführung der oben genannten Verfahrensschritte, insbesondere zur Verarbeitung der erfassten Beanspruchungen und/oder Belastungen des Bauteils und der zur Ermittlung von Betriebszuständen relevanten Signale des Gesamtsystems, insbesondere auf die oben beschriebene Weise.

Die Vorrichtung kann beispielsweise, wie bereits erwähnt, vollständig am Gesamtsystem angeordnet oder anordbar sein oder beispielsweise ist mindestens eine Komponente der Vorrichtung, insbesondere die mindestens eine Einheit zur Erfassung der Beanspruchungen und/oder Belastungen des Bauteils und/oder die mindestens eine Einheit zur Erfassung der zur Ermittlung von Betriebszuständen relevanten Signale des Gesamtsystems, am Gesamtsystem angeordnet oder anordbar. Die Verarbeitungseinheit ist dann beispielsweise eine gesamtsystemexterne Komponente der Vorrichtung, beispielsweise ein Computer.

Ausführungsbeispiele der Erfindung werden im Folgenden anhand einer Zeichnung näher erläutert.

Um Missverständnisse zu vermeiden, sei hier darauf hingewiesen, dass die oben verwendeten Begriffe Beanspruchungskollektiv, Beanspruchsungsanalyse, Beanspruchungs-Zeit-Verlauf, Beanspruchungsverlauf, Beanspruchungsmessung und Beanspruchungsmesswert sich jeweils auf die Durchführung des Verfahrens mittels Beanspruchungen beziehen. Analog ist das Verfahren, alternativ oder zusätzlich, auch mittels Belastungen durchführbar, worauf sich entsprechend dann die oben alternativ oder zusätzlich verwendeten Begriffe Belastungskollektiv, Belastungsanalyse, Belastungs-Zeit-Verlauf, Belastungsverlauf, Belastungsmessung und Belastungsmesswert beziehen.

Darin zeigt:

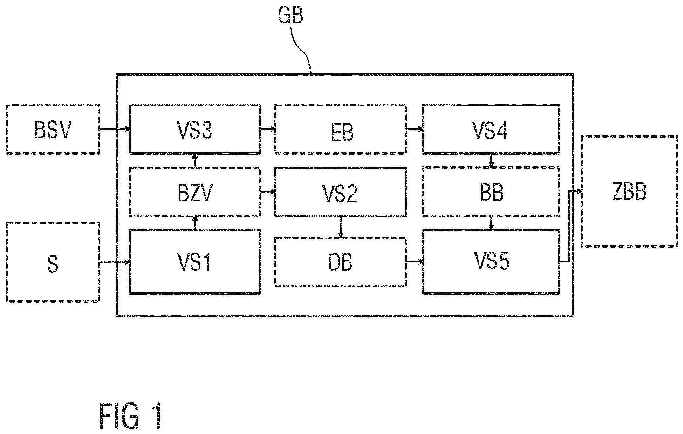

Figur 1     schematisch einen Ablauf eines Verfahrens zur Ermittlung eines Schädigungszustands mindestens eines Bauteils.

**Figur 1** zeigt schematisch einen Ablauf eines Verfahrens zur Ermittlung eines Schädigungszustands von Bauteilen, insbesondere mechanischen Bauteilen. Dieses Verfahren ermöglicht eine betriebszustandsabhängige Beanspruchungsanalyse zur Rekonstruktion zukünftiger und/oder historischer Beanspruchungskollektive eines Bauteils. Das Verfahren ermöglicht insbesondere eine Ermittlung betriebszustandsabhängiger Beanspruchungskollektive zur Rekonstruktion zukünftiger und/oder historischer Beanspruchungskollektive zur Beschreibung des aktuellen Schädigungszustandes eines Bauteils, ohne hierfür eine Beanspruchungsmessung am Bauteil vornehmen zu müssen. Voraussetzung hierfür ist die Ermittlung von zeitnormierten betriebszustandsabhängigen Beanspruchungskollektiven für das gleiche oder ein gleichartig ausgebildetes Bauteil im Voraus mittels entsprechender Beanspruchungsmessungen am Bauteil.

Alternativ oder zusätzlich erfolgt der im Folgenden beschriebene Ablauf des Verfahrens zur Ermittlung eines Schädigungszustands von Bauteilen, insbesondere mechanischen Bauteilen nicht mittels Beanspruchungen, sondern Belastungen. Das Verfahren ermöglicht dann eine betriebszustandsabhängige Belastungsanalyse zur Rekonstruktion zukünftiger und/oder historischer Belastungskollektive eines Bauteils. Das Verfahren ermöglicht dann insbesondere eine Ermittlung betriebszustandsabhängiger Belastungskollektive zur Rekonstruktion zukünftiger und/oder historischer Belastungskollektive zur Beschreibung des aktuellen Schädigungszustandes eines Bauteils, ohne hierfür eine Belastungsmessung am Bauteil vornehmen zu müssen. Daher ist in der im Folgenden auf die Beanspruchungen bezogenen Beschreibung der jeweilige Begriff oder Begriffsbestandteil Beanspruchung durch den Begriff oder Begriffsbestandteil Belastung ersetzbar, um das analoge Verfahren für Belastungen und die Belastungsanalyse zu beschreiben.

Das Verfahren ist auf Bauteile anwendbar, denen auf Basis eines Beanspruchungs-Zeit-Verlaufs BSV, d. h. eines Zeitverlaufs aufgetretener Beanspruchungen des Bauteils, ein Beanspruchungskollektiv zugewiesen werden kann. Das Beanspruchungskollektiv muss hierbei durch die Bestimmung schädigungsrelevanter Ereignisse aus dem Beanspruchungs-Zeit-Verlauf BSV ermittelt werden. Die Beanspruchung und/oder Belastung kann zum Beispiel eine mechanische Spannung, eine der mechanischen Spannung proportionale Größe, eine Temperatur, ein Druck, eine elektrische Spannung, ein elektrischer Strom oder eine beliebige andere physikalische Größe sein.

Aus dem Stand der Technik ist es bereits bekannt, eine mechanische Beanspruchungsanalyse im Sinne der Betriebsfestigkeit durchzuführen. Hierfür werden ausgehend von einer Beanspruchungs-Zeit-Funktion werkstoffmechanisch schädigungsrelevante Ereignisse erfasst und zu einem Beanspruchungskollektiv verarbeitet, beispielsweise zu einem Spannungsamplituden-Kollektiv (Nennspannungskonzept, Kerbspannungskonzept) oder einem Schädigungsparameterkollektiv (Kerbdehnungskonzept).

Die mechanische Beanspruchung wird hierbei zunächst einer Rainflowklassierung unterzogen. Aus einer dadurch erhaltenen Rainflowmatrix werden erfasste Lastwechsel nach Amplitude, Mittelwert und Häufigkeit ermittelt. Bei der Rainflowklassierung bleibt ein Residuum übrig (Umkehrpunkte, die keine Lastwechsel erzeugen), das je nach Anwendungsfall nicht berücksichtigt wird, als halber Lastwechsel berücksichtigt wird oder als ganzer Lastwechsel berücksichtigt wird. Ein dadurch entstandenes Amplituden-Mittelwert-Kollektiv kann mittels eines Haigh-Diagramms in ein Ersatzamplitudenkollektiv transformiert werden und ergibt somit das gesuchte Beanspruchungskollektiv.

Da eine Messdauer jedoch in der Regel deutlich geringer ist als eine Nutzungsdauer des Bauteils, muss das erhaltene Beanspruchungskollektiv extrapoliert werden, um dadurch ein Bemessungskollektiv für die gesamte Nutzungsdauer des Bauteils zu erhalten. Nach dem aktuellen Stand der Technik basiert diese Extrapolation vor allem auf dem Verhältnis von Messdauer und der geplanten Nutzungsdauer. Dabei wird angenommen, dass sich die Beanspruchung während der Nutzungsdauer so verhält, wie es in der Messung der Fall war. Dies erfordert bereits in der Versuchsplanung eine genaue Kenntnis eines späteren Einsatzprofils, um die Zusammensetzung der verschiedenen Einsatzszenarien korrekt abzubilden und ein möglichst repräsentatives Bemessungskollektiv zu erhalten.

Mit dem so erhaltenen Bemessungskollektiv können theoretische und experimentelle Lebensdaueranalysen durchgeführt werden.

Zur Ermittlung des aktuellen Schädigungszustandes eines Bauteils wird ein aktuelles Beanspruchungskollektiv benötigt, welches die Beanspruchungshistorie des Bauteils widerspiegelt. Dazu muss derzeit entweder eine Messung der Beanspruchung über den gesamten Nutzungszeitraum oder eine Rekonstruktion auf Basis des zuvor ermittelten Bemessungskollektivs erfolgen.

Solch eine Rekonstruktion eines aktuellen Beanspruchungskollektivs basiert bisher hauptsächlich auf dem Verhältnis von aktueller und geplanter Nutzungsdauer. Daraus folgt, dass die Kollektivformen des rekonstruierten aktuellen Beanspruchungskollektivs und des Bemessungskollektivs sich nicht unterscheiden und im Falle einer relativen Lebensdauerbetrachtung mittels einer Schadensakkumulationshypothese effektiv nur die zugehörigen Nutzungsdauern verglichen werden. Aufgrund dieser Tatsache ist eine Nutzung solcher rekonstruierten Beanspruchungskollektive zur Schädigungsbewertung im Sinne von Predictive-Maintenance, d. h. im Sinne einer prädiktiven Instandhaltung, fragwürdig.

Weiterhin existieren Ansätze nach dem Stand der Technik, die für ausgewählte zuvor definierte Betriebszustände separate Beanspruchungskollektive aus festgelegten Testbetrieben ermitteln und diese entsprechend einem Nutzungsprofil gewichtet zu einem Bemessungskollektiv superponieren. Auch die Rekonstruktion eines aktuellen Beanspruchungskollektivs auf Basis eines Nutzungsprofils ist damit möglich. Jedoch ist dieses Vorgehen mit einem hohen Aufwand in Versuchsplanung und Durchführung verbunden. Die Anzahl der handhabbaren Betriebszustände ist stark beschränkt.

Mit dem im Folgenden beschriebenen Verfahren wird daher die Beanspruchungsanalyse eines Bauteils derart erweitert, dass die schädigungsrelevanten Ereignisse in Abhängigkeit von aufgetretenen Betriebszuständen eines Gesamtsystems bestimmt werden. Das Verfahren ermöglicht somit eine Rekonstruktion eines Beanspruchungskollektivs für ein konkretes Bauteil allein aus der Erfassung der Betriebszustände des Gesamtsystems, wenn zeitnormierte Beanspruchungskollektive für die auftretenden Betriebszustände bekannt sind, welche vorteilhafterweise vorher gemäß dem hier beschriebenen Verfahren ermittelt wurden. Dies kann beispielsweise zum Online-Monitoring des aktuellen Schädigungszustandes des Bauteils genutzt werden, ohne dass am Bauteil selbst der Beanspruchungsverlauf ermittelt werden muss.

Vorteilhafterweise werden in diesem Verfahren für ein Bauteil Schädigungszustände in Abhängigkeit von Betriebszuständen eines das Bauteil umfassenden Gesamtsystems ermittelt, indem während eines Betriebs des Gesamtsystems ein Zeitverlauf von Beanspruchungen des Bauteils und ein Zeitverlauf von zur Ermittlung von Betriebszuständen relevanten Signalen S des Gesamtsystems erfasst werden, aus den erfassten Signalen S aufgetretene Betriebszustände des Gesamtsystems, insbesondere ein Zeitverlauf der aufgetretenen Betriebszustände, ermittelt werden, aus den erfassten Beanspruchungen schädigende Ereignisse ermittelt und den Betriebszuständen zugeordnet werden, Beanspruchungskollektive je Betriebszustand BB ermittelt werden und anhand einer Dauer des jeweiligen Betriebszustands zeitnormierte Beanspruchungskollektive je Betriebszustand ZBB ermittelt werden. Mittels dieser zeitnormierten Beanspruchungskollektive je Betriebszustand ZBB kann nun beispielsweise für das Bauteil in Abhängigkeit von aufgetretenen Betriebszuständen des Gesamtsystems der Schädigungszustand ermittelt werden. Alternativ oder zusätzlich kann beispielsweise in Abhängigkeit von prognostizierten zukünftig auftretenden Betriebszuständen des das Bauteil umfassenden Gesamtsystems der zukünftige Schädigungszustand ermittelt werden. Alternativ oder zusätzlich kann beispielsweise für ein gleichartig zu diesem Bauteil ausgebildetes weiteres Bauteil in Abhängigkeit von aufgetretenen Betriebszuständen eines dieses weitere Bauteil umfassenden und gleichartig zum Gesamtsystem ausgebildeten weiteren Gesamtsystems der Schädigungszustand ermittelt werden. Alternativ oder zusätzlich kann beispielsweise in Abhängigkeit von prognostizierten zukünftig auftretenden Betriebszuständen des das weitere Bauteil umfassenden weiteren Gesamtsystems der zukünftige Schädigungszustand ermittelt werden.

Das Vorgehen wird im Folgenden anhand einer Beanspruchung eines Bauteils in Form einer mechanischen Spannung, die als diskreter Zeitverlauf vorliegt, beschrieben. Es werden somit als Daten ein Beanspruchungs-Zeit-Verlauf BSV des Bauteils, d. h. ein, insbesondere diskreter, Zeitverlauf der Beanspruchungen, d. h. von Beanspruchungsmesswerten, des Bauteils, erfasst. Zusätzlich zu diesem im hier beschriebenen Beispiel als Spannungsverlauf ausgebildeten Beanspruchungs-Zeit-Verlauf BSV werden Signale S aus dem übergeordneten Gesamtsystem, welches das Bauteil umfasst, als weitere Daten erfasst. Genauer gesagt wird ein Zeitverlauf dieser Signale S erfasst. Dies sind insbesondere Signale S, die zur Ermittlung von Betriebszuständen des Gesamtsystems relevant sind. Insbesondere stehen diese Signale S auch im normalen Betrieb des Gesamtsystems zur Verfügung.

Diese Signale S werden in einem ersten Verfahrensschritt VS1 zunächst in, für die auftretenden Betriebszustände charakteristische, Bereiche, insbesondere Klassen, eingeteilt, um mögliche Betriebszustände des Gesamtsystems zu definieren. Das Ergebnis ist ein Betriebszustands-Zeit-Verlauf BZV, d. h. ein Zeitverlauf der aufgetretenen Betriebszustände.

Für die verwendeten Signale S mit den so definierten Klassen wird im Anschluss in einem zweiten Verfahrensschritt VS2 ein mehrdimensionales Histogramm gebildet, anhand dessen die Dauer des jeweiligen Betriebszustandes bestimmt wird, wobei das Histogramm insbesondere für jedes der Signale S eine Dimension aufweist. Beispielsweise kann für die Analyse eines als mechanische Fahrzeugkomponente ausgebildeten Bauteils solch ein Signal S zum Beispiel die Fahrgeschwindigkeit sein. Die relevanten Bereiche wären durch vorgesehene Arbeitspunkte gegeben. So können hier beispielsweise vier Klassen definiert werden, in denen sich die Fahrgeschwindigkeit typischerweise befindet:

Stillstand (Geschwindigkeit = 0 km/h),
Stadtfahrt (Geschwindigkeit zwischen 0 km/h und 50 km/h),
Überlandfahrt (Geschwindigkeit von 50 km/h bis 100 km/h),
Autobahnfahrt (Geschwindigkeit größer als 100 km/h).

Die Ermittlung des Histogramms erfolgt im zweiten Verfahrensschritt VS2 über eine mehrparametrische, bezogene Momentanwertzählung. Das heißt, zu jedem Messpunkt, an welchem ein Beanspruchungsmesswert erfasst wurde, werden die Werte aller zur Ermittlung der Betriebszustände relevanten erfassten Signale S des Gesamtsystems (d. h. der erfassten Signale S mit Ausnahme der mechanischen Spannung) ermittelt und es werden die zugehörigen Klassen der Signale S bestimmt. Zu jeder Kombination der Klassen existiert genau ein Element im Histogramm, dessen Zählwert um das Zeitintervall zum vorherigen Messpunkt erhöht wird. Jedes Element des Histogramms stellt dabei formal einen Betriebszustand dar. Das Ergebnis dieses zweiten Verfahrensschritts VS2 ist somit eine Dauer der Betriebszustände DB des Gesamtsystems.

Es wird somit ein realer Ablauf von Betriebszuständen und eine reale Dauer des jeweiligen Betriebszustandes ermittelt und nicht eine vorgegebene Abfolge und Zeitdauer von Betriebszuständen mittels des Gesamtsystems abgearbeitet. Das Verfahren kann somit beispielsweise in einem realen Betrieb des Gesamtsystems durchgeführt werden, wodurch im Vergleich zu einem Testsystem und damit durchgeführten vorgegebenen Betriebszuständen während eines Testbetriebs realistischere Ergebnisse erzielt werden können. Insbesondere ergibt sich der Vorteil zu bisherigen Verfahren dadurch, dass Wechsel in den Betriebszuständen automatisch erkannt werden können und nicht besonders berücksichtigt oder bewusst hervorgerufen werden müssen.

Als nächster und somit dritter Verfahrensschritt VS3 erfolgt nun eine Beanspruchungsanalyse, welche gegenüber der oben beschriebenen bisher verwendeten Beanspruchungsanalyse modifiziert ist. D. h. es erfolgt eine gegenüber der oben beschriebenen aus dem Stand der Technik bekannten Vorgehensweise modifizierte Ermittlung der schädigungsrelevanten, d. h. das Bauteil schädigenden, Ereignisse. Hierfür wird zunächst jedem Beanspruchungsmesswert sein zugehöriger Betriebszustand auf Basis der Signale S des Gesamtsystems zugeordnet. Eingangsdaten sind somit der ermittelte Betriebszustands-Zeit-Verlauf BZV und der Beanspruchungs-Zeit-Verlauf BSV. Danach wird eine modifizierte Form der Rainflowklassierung durchgeführt. Dabei wird die Ermittlung der schädigenden Ereignisse, in diesem Beispiel der Lastwechsel, nach der klassischen Rainflowklassierung durchgeführt. Die eigentliche Modifikation erfolgt bei der Speicherung dieser ermittelten das Bauteil schädigenden Ereignisse.

Nach dem klassischen Verfahren würden die Lastwechsel in einer Rainflowmatrix gespeichert. Im Gegensatz dazu wird bei dem hier beschriebenen Verfahren für jeden Betriebszustand eine separate Rainflowmatrix erzeugt, in der die gezählten Lastwechsel anteilig auf die an der Entstehung der Lastwechsel jeweils beteiligten Betriebszuständen aufgeteilt werden.

Ein Lastwechsel nach der klassischen Rainflowklassierung besteht aus zwei Umkehrpunkten, die nach Zählung des Lastwechsels aus dem Beanspruchungsverlauf entfernt werden, die jeweils durch einen Beanspruchungsmesswert und/oder Belastungsmesswert charakterisiert sind. Im hier beschriebenen Verfahren sind neben dem Beanspruchungsmesswert der Umkehrpunkte jedoch auch die zugehörigen Betriebszustände bekannt. Daher wird der jeweilige Lastwechsel in zwei halbe Lastwechsel aufgeteilt und jeweils in den Rainflowmatrizen der zu den Umkehrpunkten gehörigen Betriebszustände gespeichert.

Die Berücksichtigung des Residuums erfolgt ähnlich. Auch hier wird der Lastwechsel entsprechend der Art der Berücksichtigung, d. h. ob kein Lastwechsel, ein halber Lastwechsel oder ein ganzer Lastwechsel vorliegt, zu je 50% auf die Rainflowmatrizen der beteiligten Betriebszustände aufgeteilt. Nur für den Sonderfall, dass nur ein Betriebszustand aufgetreten ist, entspricht das Ergebnis der modifizierten Rainflowklassierung dem Ergebnis der oben beschriebenen klassischen Rainflowklassierung.

In einer alternativen Ausführungsform erfolgt die Aufteilung auf Basis der oben beschriebenen, energetisch motivierten, Gewichtung. Dazu werden im Gegensatz zur klassischen Rainflowklassierung nicht nur die Umkehrpunkte betrachtet, sondern alle Beanspruchungsmesswerte und ihre zugehörigen Betriebszustände innerhalb des Zeitraums, über den der Lastwechsel andauert. Für jedes Zeitintervall wird der Betrag des Lastinkrements, d. h. die Spannungsdifferenz zwischen den beiden Zeitpunkten, zu dem zum Beginn des Zeitintervalls wirkenden Betriebszustand zugewiesen. Das energetisch motivierte Gewicht eines Betriebszustands am gesamten Lastwechsel ergibt sich dann als Summe der ihm zugewiesenen Beträge der Lastinkremente, geteilt durch die doppelte Differenz aus oberstem und unterstem Spannungswert des Lastwechsels. Der Lastwechsel wird anschließend als das Produkt aus seiner Häufigkeit und dem energetisch motivierten Gewicht des Betriebszustandes zum Eintrag in der Rainflowmatrix des entsprechenden Betriebszustandes addiert. Die Position des Lastwechsels in den Rainflowmatrizen, d. h. die Zeilennummer und die Spaltennummer, der Betriebszustände ist gegenüber dem Stand der Technik unverändert. Alle Messpunkte des Lastwechsels, ausgenommen dem letzten, werden anschließend aus dem Spannungs-Zeit-Verlauf und dem Betriebszustand-Zeit-Verlauf entfernt, wodurch eingeschlossene Lastwechsel aus der weiteren Zählung entfernt werden, wie auch in der klassischen Rainflowklassierung. Auch nach dieser Vorgehensweise entspricht das Ergebnis für den Sonderfall, dass nur ein Betriebszustand aufgetreten ist, dem Ergebnis der klassischen Rainflowklassierung.

Das Ergebnis dieses dritten Verfahrensschritts VS3 sind die das Bauteil schädigenden Ereignisse je Betriebszustand EB, d. h. die Aufteilung der das Bauteil schädigenden Ereignisse auf die Betriebszustände.

Die so erhaltenen Rainflowmatrizen werden im dargestellten Beispiel vorteilhafterweise in mindestens einem weiteren, hier vierten, Verfahrensschritt VS4 für jeden Betriebszustand individuell ausgewertet, um als Ergebnis Beanspruchungskollektive je Betriebszustand BB zu erhalten. Hierbei werden die erfassten Lastwechsel, im hier beschriebenen Ausführungsbeispiel der mechanischen Spannung nach Spannungsamplitude, Mittelspannung und Häufigkeit, extrahiert. Die Berücksichtigung der Mittelspannung erfolgt nach dem Haigh-Diagramm, vorzugsweise auf eine schädigungsäquivalente, mittelspannungsfreie Amplitude. Auf diese Weise werden die Beanspruchungskollektive je Betriebszustand BB als Ersatzamplitudenkollektive je Betriebszustand erhalten. Diese werden in einem weiteren, hier fünften, Verfahrensschritt VS5 in der Häufigkeit ihrer einzelnen Kollektivstufen auf die Dauer des zugehörigen Betriebszustandes normiert. D. h. es erfolgt eine Normierung des Umfangs der Beanspruchungskollektive mit der Dauer des jeweils zugehörigen Betriebszustands. Die quantitative Beschreibung des Schädigungsinhaltes von Schädigungsmerkmalen ist damit in diesem Beispiel als mittelspannungstransformierte Spannungsamplitude gegeben, welche dem Fachmann auch unter der Bezeichnung Ersatzspannungsamplitude bekannt ist.

In einer möglichen Ausführungsform des Verfahrens kann zusätzlich dazu in diesem Normierungsvorgang auch die Höhe der Beanspruchung der einzelnen Kollektivstufen beeinflusst werden. Dies geschieht unter Berücksichtigung statistischer Kenngrößen der Verteilung der Beanspruchungshöchstwerte und dem Verhältnis der Dauer eines Betriebszustandes zu einer prognostizierten gesamten Lebensdauer des Gesamtsystems.

Das Ergebnis ist ein zeitbezogenes, d. h. zeitnormiertes, Beanspruchungskollektiv je Betriebszustand ZBB, d. h. für jeden Betriebszustand ein zeitnormiertes Beanspruchungskollektiv. Dies ist das bezogene, d. h. zeitbezogene, Schädigungsmerkmal des jeweiligen Betriebszustands.

Der beschriebene Verfahrensablauf der Ermittlung des zeitnormierten Beanspruchungskollektivs je Betriebszustand ZBB aus dem Beanspruchungs-Zeit-Verlauf BSV für das Bauteil und dem Zeitverlauf der Signale S des das Bauteil umfassenden Gesamtsystems ist eine gekoppelte Beanspruchungsanalyse GB.

Das beschriebene Vorgehen ist beispielhaft für die Auswertung eines mechanischen Spannungs-Zeit-Verlaufs auf Grundlage des Nennspannungskonzepts oder des Kerbspannungskonzepts der Betriebsfestigkeit, aber nicht auf diese Anwendungsfälle beschränkt. Das Prinzip des hier beschriebenen Verfahrens beruht auf der Zuordnung der Betriebszustände des Gesamtsystems zum zugehörigen Beanspruchungsmesswert des Bauteils und der Erzeugung eines jeweils individuellen Satzes an Schädigungsmerkmalen für den jeweiligen Betriebszustand, wobei ein schädigendes Ereignis zu gleichen Teilen auf die daran beteiligten Betriebszustände aufgeteilt wird.

Mittels der auf die beschriebene Weise ermittelten zeitbezogenen, d. h. zeitnormierten, Beanspruchungskollektive je Betriebszustand ZBB lässt sich nun für jeden beliebigen Zeitraum ein Beanspruchungskollektiv für ein Bauteil rekonstruieren, beispielsweise für das Bauteil, mittels welchem die zeitnormierten Beanspruchungskollektive je Betriebszustand ZBB auf die oben beschriebene und in Figur 1 dargestellte Weise ermittelt wurden, und/oder ebenso für ein gleichartiges weiteres Bauteil eines gleichartigen weiteren Gesamtsystems. Dafür wird lediglich ein Histogramm für das Auftreten der Betriebszustände dieses Bauteils, für welches das Beanspruchungskollektiv rekonstruiert werden soll, genauer gesagt des Gesamtsystems mit diesem Bauteil, in einem jeweils betrachteten, d. h. interessierenden, Zeitintervall benötigt.

Das Auftreten der Betriebszustände kann beispielsweise ermittelt werden, indem tatsächlich auftretende Betriebszustände dieses Gesamtsystems erfasst werden, beispielsweise analog zur oben beschriebenen Vorgehensweise gemäß den Verfahrensschritten VS1 und VS2 aus einem erfassten Zeitverlauf von Signalen S dieses Gesamtsystems, oder es kann beispielsweise ein Betriebszustandsverlauf vorgegeben werden, beispielsweise resultierend aus einer Nutzungsprognose für das Gesamtsystem. Die zeitbezogenen d. h. zeitnormierten, Beanspruchungskollektive je Betriebszustand ZBB werden nun auf die Dauer des jeweiligen Betriebszustandes extrapoliert, beispielsweise indem sie in ihrer Häufigkeit mit der Dauer des jeweiligen Betriebszustands multipliziert werden, und anschließend zu einem gesamten Beanspruchungskollektiv über alle Betriebszustände superponiert.

In einer möglichen Ausführungsform des Verfahrens kann zusätzlich dazu in diesem Extrapolationsvorgang auch die Höhe der Beanspruchung und/oder Belastung der einzelnen Kollektivstufen beeinflusst werden. Dies geschieht unter Berücksichtigung der zur Normierung verwendeten statistischen Kenngrößen der Verteilung der Beanspruchungshöchstwerte und beispielsweise dem Verhältnis der Dauer eines Betriebszustandes zu einer prognostizierten gesamten Lebensdauer des Gesamtsystems.

In einer weiteren möglichen Ausführungsform des Verfahrens wird die Normierung und Extrapolation auf Basis der Extrapolation von Rainflowmatrizen durchgeführt, wobei der Verfahrensschritt VS4 zunächst ausbleibt. Hierbei wird im Verfahrensschritt VS5 direkt eine Normierung der Rainflowmatrizen als Extrapolation auf niedrigere Betriebszustandsdauern durchgeführt. Vor der Ermittlung eines gesamten Beanspruchungskollektivs erfolgt dann zunächst die Extrapolation der Rainflowmatrizen der Betriebszustände anhand der Dauer des jeweiligen Betriebszustandes, im Anschluss Verfahrensschritt VS4 zur Ermittlung eines aktuellen Beanspruchungskollektivs des Betriebszustandes basierend auf einer aktuellen Rainflowmatrix und zuletzt die Superposition aller aktueller Beanspruchungskollektive der aufgetretenen Betriebszustände.

Dieses superponierte gesamte Beanspruchungskollektiv ist das rekonstruierte Beanspruchungskollektiv für das Bauteil, wie oben erwähnt beispielsweise für das Bauteil, mittels welchem die zeitnormierten Beanspruchungskollektive je Betriebszustand ZBB auf die oben beschriebene und in Figur 1 dargestellte Weise ermittelt wurden, und/oder für ein gleichartiges weiteres Bauteil eines gleichartigen weiteren Gesamtsystems.

Der besondere Vorteil dieser Vorgehensweise liegt darin, dass für die Rekonstruktion eines Beanspruchungskollektivs nicht erneut eine Beanspruchungsmessung im entsprechenden Zeitbereich durchgeführt werden muss. Ausgehend davon lässt sich zudem durch eine entsprechende Wahl von rekonstruierten Beanspruchungskollektiven der aktuelle Schädigungszustand eines Bauteils ableiten. Dazu ist ein Beanspruchungskollektiv erforderlich, das der über die gesamte Lebensdauer des Bauteils zu ertragenden Beanspruchung im Sinne eines Ausfallkriteriums entspricht. Dies kann beispielsweise ermittelt werden, indem ein Histogramm für das Auftreten der Betriebszustände für die zu erwartende Lebensdauer durch Extrapolation aus einer Messung konstruiert wird oder eine Messung über eine Gruppe gleicher Gesamtsysteme, beispielsweise über eine gesamte Fahrzeugflotte, im Umfang der zu erwartenden Lebensdauer durchgeführt wird und die einzelnen Histogramme aller Gesamtsysteme, beispielsweise aller Fahrzeuge, superponiert werden. Aus diesem Histogramm wird durch Rekonstruktion mit den zeitbezogenen, d. h. zeitnormierten, Beanspruchungskollektiven je Betriebszustand ZBB ein Bemessungskollektiv für das Bauteil bestimmt.

Des Weiteren kann ein Histogramm des Auftretens der Betriebszustände über die gesamte Nutzungsdauer eines Gesamtsystems, beispielsweise eines Fahrzeugs, ermittelt werden. Aus der Rekonstruktion des Beanspruchungskollektivs auf Basis dieses Histogramms lässt sich das Beanspruchungskollektiv des Gesamtsystems, beispielsweise des Fahrzeugs, bis zum aktuellen Zeitpunkt rekonstruieren. Durch den Vergleich dieses aktuellen rekonstruierten Beanspruchungskollektivs mit dem Bemessungskollektiv lässt sich die aktuelle Schädigung des Bauteils im Vergleich zum Bemessungskollektiv bestimmen. Ein geeignetes Verfahren hierfür stellt die lineare Schadensakkumulationshypothese nach Palmgren und Miner dar, beispielsweise in der Modifikation "Miner-Elementar".

Voraussetzung für die Anwendbarkeit dieses Verfahrens zur Bestimmung einer Schädigung ist die Kenntnis einer Wöhlerlinie. Diese wird entweder experimentell ermittelt oder nach geeigneten Verfahren abgeschätzt (z.B. nach FKM-Richtlinie). Aus der linearen Schadensakkumulationsrechnung ergibt sich für das rekonstruierte Beanspruchungskollektiv und das Bemessungskollektiv jeweils eine Schädigungssumme, wobei das Verhältnis der beiden Schädigungssummen die aktuelle Schädigung des Bauteils, d. h. den aktuellen Schädigungszustand, darstellt. Durch die permanente Aktualisierung des aktuellen rekonstruierten Beanspruchungskollektivs über die Aktualisierung des Histogramms des Auftretens der Betriebszustände ist somit ein Online-Monitoring des Schädigungszustandes des Bauteils möglich.

Das beschriebene Vorgehen ist beispielhaft für die Ermittlung der Schädigung eines Ersatzamplitudenkollektivs als Beanspruchungskollektiv auf Grundlage des Nennspannungskonzepts oder des Kerbspannungskonzepts der Betriebsfestigkeit, aber nicht auf diese Anwendungsfälle beschränkt. Das Prinzip beruht auf der separaten Ermittlung der Schädigung von aktuellem rekonstruiertem Beanspruchungskollektiv und Bemessungskollektiv nach einem geeigneten Verfahren zur Bestimmung der Schädigung und dem Vergleich der so erhaltenen Schädigungen.

Als ein weiteres Ausführungsbeispiel wird im Folgenden das Vorgehen für die modifizierte Beanspruchungsanalyse auf Basis des Kerbdehnungskonzepts beschrieben. In diesem Fall unterscheiden sich lediglich die konkrete Umsetzung der Verfahrensschritte VS3 und VS4 von der oben beschriebenen Vorgehensweise. Im Schritt VS3 werden die schädigenden Ereignisse in Form von Lastwechseln mittels Rainflowklassierung bestimmt. Diese werden jedoch nicht wie oben beschrieben in Rainflowmatrizen gespeichert, sondern direkt nach ihrer Erfassung und/oder unter Berücksichtigung der Reihenfolge ihres Auftretens in einem Schritt VS4 nach dem Kerbdehnungskonzept der Betriebsfestigkeit in einen Beanspruchungskennwert (hier: Schädigungsparameter) umgerechnet. Der so bestimmte Schädigungsparameter wird entsprechend den am zugehörigen Lastwechsel beteiligten Betriebszuständen (beispielsweise Betriebszustände zugehörig zu den Umkehrpunkten des Lastwechsels), insbesondere anteilig, beispielsweise jeweils als Schädigungsparameter mit 50% der ursprünglichen Häufigkeit - d. h. 0,5 - zu den Schädigungsparameterkollektiven der zugehörigen Betriebszustände hinzugefügt. Auf diese Weise werden die Beanspruchungskollektive je Betriebszustand BB als Schädigungsparameterkollektive je Betriebszustand erhalten.

In einer alternativen Ausführungsform erfolgt die Aufteilung der Schädigungsparameter auf die Betriebszustände vorzugsweise nach der oben beschriebenen, insbesondere energetisch motivierten, Gewichtung.

Das weitere Vorgehen erfolgt, zumindest im Wesentlichen, analog zum obigen Beispiel. Den einzigen Unterschied stellt hier teilweise die Bestimmung der Schädigung dar. Nach dem Kerbdehnungskonzept werden dem verwendeten Schädigungsparameter entsprechende Schädigungsparameterwöhlerlinien anstelle gewöhnlicher Wöhlerlinien benötigt. Die Bestimmung der Schädigungssumme erfolgt analog zur Miner-Regel.

Das Verfahren kann beispielsweise mittels einer Vorrichtung durchgeführt werden, welche zum Beispiel direkt am Gesamtsystem, d. h. onboard, oder beispielsweise teilweise am Gesamtsystem und teilweise offboard, d. h. gesamtsystemextern, angeordnet ist. Gesamtsystemextern umfasst die Vorrichtung insbesondere eine Verarbeitungseinheit, zum Beispiel in Form eines Computers. Bei der vollständig am Gesamtsystem angeordneten Vorrichtung ist die Verarbeitungseinheit beispielsweise ein Steuergerät oder eine andere Rechnereinheit. Gesamtsystemextern kann das Verfahren beispielsweise auf Basis extern aufgezeichneter Daten, insbesondere Zeitverläufen der Beanspruchung des betrachteten Bauteils und den zur Bestimmung der Betriebszustände relevanten Signalen des Gesamtsystems, durchgeführt werden. Beispielsweise umfasst die Vorrichtung hierfür entsprechende Erfassungseinheiten am Gesamtsystem, welche diese Daten an eine externe Einheit, insbesondere an die Verarbeitungseinheit, zur Aufzeichnung und Verarbeitung übertragen. Alternativ können diese Daten beispielsweise zunächst am Gesamtsystem aufgezeichnet und später zur Auswertung an die Verarbeitungseinheit übertragen werden. Die Datenübertragung kann beispielsweise kabellos, beispielsweise über Funk, oder kabelgebunden erfolgen.

Eine solche erfindungsgemäße Vorrichtung ist somit ausgebildet und eingerichtet zur Durchführung des Verfahrens.

Die Vorrichtung umfasst beispielsweise mindestens eine Einheit zur Erfassung der Beanspruchungen des Bauteils, mindestens eine Einheit zur Erfassung der zur Ermittlung von Betriebszuständen relevanten Signale S des Gesamtsystems und mindestens eine Verarbeitungseinheit. Die Verarbeitungseinheit ist insbesondere ausgebildet und eingerichtet zur Durchführung der oben genannten Verfahrensschritte, insbesondere zur Verarbeitung der erfassten Beanspruchungen des Bauteils und der zur Ermittlung von Betriebszuständen relevanten Signale S des Gesamtsystems, insbesondere auf die oben beschriebene Weise.

Die Vorrichtung kann beispielsweise, wie bereits erwähnt, vollständig am Gesamtsystem angeordnet oder anordbar sein oder beispielsweise ist mindestens eine Komponente der Vorrichtung, insbesondere die mindestens eine Einheit zur Erfassung der Beanspruchungen des Bauteils und/oder die mindestens eine Einheit zur Erfassung der zur Ermittlung von Betriebszuständen relevanten Signale S des Gesamtsystems, am Gesamtsystem angeordnet oder anordbar. Die Verarbeitungseinheit ist dann beispielsweise eine gesamtsystemexterne Komponente der Vorrichtung, beispielsweise ein Computer.

## BEZUGSZEICHENLISTE

BB    Beanspruchungskollektive je Betriebszustand
BSV   Beanspruchungs-Zeit-Verlauf
BZV   Betriebszustands-Zeit-Verlauf
DB    Dauer der Betriebszustände
EB    schädigende Ereignisse je Betriebszustand
GB    gekoppelte Beanspruchungsanalyse
S    Signale
ZBB   zeitnormiertes Beanspruchungskollektiv je Betriebszustand

VS1   erster Verfahrensschritt
VS2   zweiter Verfahrensschritt
VS3   dritter Verfahrensschritt
VS4   vierter Verfahrensschritt
VS5   fünfter Verfahrensschritt

## Patentansprüche

1. Verfahren zur Ermittlung eines Schädigungszustands von Bauteilen, wobei für ein Bauteil Schädigungszustände in Abhängigkeit von Betriebszuständen eines das Bauteil umfassenden Gesamtsystems ermittelt werden, indem während eines Betriebs des Gesamtsystems ein Zeitverlauf von Beanspruchungen und/oder Belastungen des Bauteils und ein Zeitverlauf von zur Ermittlung von Betriebszuständen relevanten Signalen (S) des Gesamtsystems erfasst werden, aus den erfassten Signalen (S) aufgetretene Betriebszustände des Gesamtsystems, insbesondere ein Zeitverlauf der aufgetretenen Betriebszustände, ermittelt werden, aus den erfassten Beanspruchungen und/oder Belastungen schädigende Ereignisse ermittelt und den Betriebszuständen zugeordnet werden, Beanspruchungskollektive und/oder Belastungskollektive je Betriebszustand (BB) ermittelt werden und anhand einer Dauer des jeweiligen Betriebszustands zeitnormierte Beanspruchungskollektive und/oder Belastungskollektive je Betriebszustand (ZBB) ermittelt werden, wobei mittels der zeitnormierten Beanspruchungskollektive und/oder Belastungskollektive je Betriebszustand (ZBB)

    - für das Bauteil in Abhängigkeit von aufgetretenen Betriebszuständen des Gesamtsystems der Schädigungszustand ermittelt wird, und/oder in Abhängigkeit von prognostizierten zukünftig auftretenden Betriebszuständen des das Bauteil umfassenden Gesamtsystems der zukünftige Schädigungszustand ermittelt wird, und/oder
    - für ein gleichartig zu diesem Bauteil ausgebildetes weiteres Bauteil in Abhängigkeit von aufgetretenen Betriebszuständen eines dieses weitere Bauteil umfassenden und gleichartig zum Gesamtsystem ausgebildeten weiteren Gesamtsystems der Schädigungszustand ermittelt wird, und/oder in Abhängigkeit von prognostizierten zukünftig auftretenden Betriebszuständen des das weitere Bauteil umfassenden weiteren Gesamtsystems der zukünftige Schädigungszustand ermittelt wird.

2. Verfahren nach Anspruch 1,

wobei eine Klasseneinteilung der Signale (S) des Gesamtsystems und dadurch eine Definition möglicher Betriebszustände durchgeführt wird, um den Zeitverlauf der aufgetretenen Betriebszustände zu erhalten, und wobei die Dauer des jeweiligen Betriebszustands bestimmt wird, indem für die Signale (S) des Gesamtsystems mit den Klassen, in welche sie eingeteilt sind, ein mehrdimensionales Histogramm gebildet wird, anhand dessen die Dauer des jeweiligen Betriebszustandes bestimmt wird, und

wobei die Ermittlung des Histogramms über eine mehrparametrische, bezogene Momentanwertzählung erfolgt, und

wobei aus den erfassten Beanspruchungen und/oder Belastungen schädigende Ereignisse ermittelt und den Betriebszuständen zugeordnet werden und somit schädigende Ereignisse je Betriebszustand (EB) ermittelt werden, indem eine Beanspruchungsanalyse und/oder Belastungsanalyse durchgeführt wird, und wobei in der Beanspruchungsanalyse und/oder Belastungsanalyse

- jeder Beanspruchung und/oder Belastung ihr zugehöriger Betriebszustand auf Basis der Signale (S) des Gesamtsystems zugeordnet wird,

- eine Rainflowklassierung der Beanspruchungen und/oder Belastungen zur Bestimmung des Auftretens schädigender Ereignisse in Form von Lastwechseln durchgeführt wird.

3. Verfahren nach Anspruch 2,
wobei in der Beanspruchungsanalyse und/oder Belastungsanalyse

- für jeden Betriebszustand eine separate Rainflowmatrix erzeugt wird, in der gezählte Lastwechsel anteilig auf die an der Entstehung der Lastwechsel jeweils beteiligten Betriebszuständen aufgeteilt werden,

- für eine Berücksichtigung eines Residuums der jeweilige Lastwechsel entsprechend einer Art der Berücksichtigung, insbesondere ob kein Lastwechsel, ein halber Lastwechsel oder ein ganzer Lastwechsel vorliegt, auf die Rainflowmatrizen der beteiligten Betriebszustände aufgeteilt wird, insbesondere anteilig auf die Rainflowmatrizen der beteiligten Betriebszustände aufgeteilt wird.

4. Verfahren nach Anspruch 2 oder 3,
wobei in der Beanspruchungsanalyse und/oder Belastungsanalyse

- für jeden Betriebszustand eine separate Rainflowmatrix erzeugt wird, in der gezählte Lastwechsel anteilig auf die an der Entstehung der Lastwechsel jeweils beteiligten Betriebszuständen aufgeteilt werden, indem der jeweilige Lastwechsel in zwei halbe Lastwechsel aufgeteilt und jeweils in den Rainflowmatrizen der zu Umkehrpunkten gehörigen Betriebszustände gespeichert wird,

- für eine Berücksichtigung eines Residuums der jeweilige Lastwechsel entsprechend einer Art der Berücksichtigung, insbesondere ob kein Lastwechsel, ein halber Lastwechsel oder ein ganzer Lastwechsel vorliegt, zu je 50% auf die Rainflowmatrizen der beteiligten Betriebszustände aufgeteilt wird.

5. Verfahren nach Anspruch 2 oder 3,
wobei in der Beanspruchungsanalyse und/oder Belastungsanalyse

- für jeden Betriebszustand eine separate Rainflowmatrix erzeugt wird, in der gezählte Lastwechsel anteilig auf die an der Entstehung der Lastwechsel jeweils beteiligten Betriebszuständen aufgeteilt werden, indem der jeweilige Lastwechsel gewichtet zu den an seiner Entstehung beteiligten Betriebszuständen aufgeteilt und entsprechend in den Rainflowmatrizen dieser Betriebszustände gespeichert wird,

- für eine Berücksichtigung eines Residuums der jeweilige Lastwechsel entsprechend einer Art der Berücksichtigung, insbesondere ob kein Lastwechsel, ein halber Lastwechsel oder ein ganzer Lastwechsel vorliegt, gewichtet zu den an seiner Entstehung beteiligten Betriebszuständen auf die Rainflowmatrizen der beteiligten Betriebszustände aufgeteilt wird.

6. Verfahren nach Anspruch 5,
wobei das Gewicht des jeweiligen Betriebszustands bestimmt wird, indem ein Zeitraum, während dem der jeweilige Lastwechsel eingetreten ist, und eine gesamte Dauer des jeweiligen Betriebszustands innerhalb dieses Zeitraums ermittelt wird und sich das Gewicht als das Verhältnis der gesamten Betriebszustandsdauer des jeweiligen Betriebszustands zur Gesamtdauer des jeweiligen Lastwechsels ergibt.

7. Verfahren nach Anspruch 5,
wobei das Gewicht des jeweiligen Betriebszustands bestimmt wird als das Verhältnis der akkumulierten Beträge der Beanspruchungs- und/oder Belastungsinkremente der zugehörigen Lastwechsel in dem jeweiligen Betriebszustand zum gesamten Beanspruchungs- und/oder Belastungsinkrement der zugehörigen Lastwechsel, wobei sich das gesamte Beanspruchungs- und/oder Belastungsinkrement der zugehörigen Lastwechsel aus der doppelten Differenz von oberen zu unteren Beanspruchungs- bzw. Belastungsmesswerten der Umkehrpunkte der zugehörigen Lastwechsel ergibt.

8. Verfahren nach einem der Ansprüche 3 bis 7,
   wobei die Beanspruchungskollektive und/oder Belastungskollektive je Betriebszustand (BB) ermittelt werden, indem die Rainflowmatrizen für jeden Betriebszustand individuell ausgewertet werden, insbesondere indem die erfassten Lastwechsel extrahiert werden.

9. Verfahren nach Anspruch 2,
   wobei in der Beanspruchungsanalyse und/oder Belastungsanalyse die ermittelten Lastwechsel direkt nach ihrer Ermittlung und/oder unter Berücksichtigung der Reihenfolge ihres Auftretens in einen Schädigungsparameter umgerechnet und jeweils als Schädigungsparameter, insbesondere anteilig, zu Schädigungsparameterkollektiven der am zugehörigen Lastwechsel beteiligten Betriebszustände hinzugefügt werden, wobei die Schädigungsparameterkollektive je Betriebszustand die Beanspruchungskollektive und/oder Belastungskollektive je Betriebszustand (BB) darstellen.

10. Verfahren nach Anspruch 2 oder 9,
    wobei in der Beanspruchungsanalyse und/oder Belastungsanalyse die ermittelten Lastwechsel direkt nach ihrer Ermittlung und/oder unter Berücksichtigung der Reihenfolge ihres Auftretens in einen Schädigungsparameter umgerechnet und jeweils als Schädigungsparameter mit der Hälfte der ursprünglichen Häufigkeit, zu Schädigungsparameterkollektiven der am zugehörigen Lastwechsel beteiligten Betriebszustände hinzugefügt werden, wobei die Schädigungsparameterkollektive je Betriebszustand die Beanspruchungskollektive und/oder Belastungskollektive je Betriebszustand (BB) darstellen.

11. Verfahren nach Anspruch 2 oder 9,
    wobei in der Beanspruchungsanalyse und/oder Belastungsanalyse die ermittelten Lastwechsel direkt nach ihrer Ermittlung und/oder unter Berücksichtigung der Reihenfolge ihres Auftretens in einen Schädigungsparameter umgerechnet und jeweils als Schädigungsparameter, gewichtet zu den an seiner Entstehung beteiligten Betriebszuständen aufgeteilt, zu Schädigungsparameterkollektiven der am zugehörigen Lastwechsel beteiligten Betriebszustände hinzugefügt werden, wobei die Schädigungsparameterkollektive je Betriebszustand die Beanspruchungskollektive und/oder Belastungskollektive je Betriebszustand (BB) darstellen.

12. Verfahren nach Anspruch 11,
    wobei das Gewicht des jeweiligen Betriebszustands bestimmt wird, indem ein Zeitraum, während dem der jeweilige Lastwechsel eingetreten ist, und eine gesamte Dauer des jeweiligen Betriebszustands innerhalb dieses Zeitraums ermittelt wird und sich das Gewicht als das Verhältnis der gesamten Betriebszustandsdauer des jeweiligen Betriebszustands zur Gesamtdauer des jeweiligen Lastwechsels ergibt.

13. Verfahren nach Anspruch 11,
    wobei das Gewicht des jeweiligen Betriebszustands bestimmt wird als das Verhältnis der akkumulierten Beträge der Beanspruchungs- und/oder Belastungsinkremente der zugehörigen Lastwechsel in dem jeweiligen Betriebszustand zum gesamten Beanspruchungs- und/oder Belastungsinkrement der zugehörigen Lastwechsel, wobei sich das gesamte Beanspruchungs- und/oder Belastungsinkrement der zugehörigen Lastwechsel aus der doppelten Differenz von oberen zu unteren Beanspruchungs- bzw. Belastungsmesswerten der Umkehrpunkte der zugehörigen Lastwechsel ergibt.

14. Verfahren nach einem der vorhergehenden Ansprüche,
    wobei die zeitnormierten Beanspruchungskollektive und/oder Belastungskollektive je Betriebszustand (ZBB) ermittelt werden, indem die Beanspruchungskollektive und/oder Belastungskollektive je Betriebszustand (BB) in der Häufigkeit ihrer einzelnen Kollektivstufen auf die Dauer des zugehörigen Betriebszustandes normiert werden.

15. Vorrichtung, ausgebildet und eingerichtet zur Durchführung eines Verfahrens nach einem der vorhergehenden Ansprüche,

    umfassend

- mindestens eine Einheit zur Erfassung der Beanspruchungen und/oder Belastungen des Bauteils,
- mindestens eine Einheit zur Erfassung der zur Ermittlung von Betriebszuständen relevanten Signale (S) des Gesamtsystems, und
- mindestens eine Verarbeitungseinheit,

wobei die Vorrichtung vollständig am Gesamtsystem angeordnet oder anordbar ist oder wobei mindestens eine Komponente der Vorrichtung, insbesondere die mindestens eine Einheit zur Erfassung der Beanspruchungen und/oder Belastungen des Bauteils und/oder die mindestens eine Einheit zur Erfassung der zur Ermittlung von Betriebszuständen relevanten Signale (S) des Gesamtsystems, am Gesamtsystem angeordnet oder anordbar sind/ist.

**Claims**

1. Method for determining a damage condition of components, wherein damage conditions are determined for a component on the basis of operating states of an integral system comprising the component by recording, during operation of the integral system, a time characteristic of stresses and/or strains on the component and a time characteristic of signals (S) of the integral system that are relevant to the determination of operating states, by using the detected signals (S) to determine operating states of the integral system that have occurred, in particular a time characteristic of the operating states that have occurred, by using the detected stresses and/or strains to determine damaging events and to associate them with the operating states, by determining stress collectives and/or strain collectives for each operating state (BB) and by taking a duration of the respective operating state as a basis for determining time-normalized stress collectives and/or strain collectives for each operating state (ZBB), wherein the time-normalized stress collectives and/or strain collectives for each operating state (ZBB) are used

   - to determine the damage condition for the component on the basis of operating states of the integral system that have occurred, and/or to determine the future damage condition on the basis of operating states of the integral system comprising the component that are predicted to occur in the future, and/or
   - to determine the damage condition for a further component designed in the same way as this component on the basis of operating states of a further integral system comprising this further component and designed in the same way as the integral system that have occurred, and/or to determine the future damage condition on the basis of operating states of the further integral system comprising the further component that are predicted to occur in the future.

2. Method according to Claim 1,

   wherein the signals (S) of the integral system are classified and, as a result, possible operating states are defined in order to obtain the time characteristic of the operating states that have occurred, and
   wherein the duration of the respective operating state is determined by forming a multi-dimensional histogram for the signals (S) of the integral system with the classes into which they are split, which histogram is taken as a basis for determining the duration of the respective operating state, and
   wherein the histogram is determined by way of a multiparametric, referenced instantaneous value count, and wherein the detected stresses and/or strains are used to determine damaging events and to associate them with the operating states, and thus damaging events are determined for each operating state (EB) by performing a stress analysis and/or strain analysis, and wherein the stress analysis and/or strain analysis involves
   - each stress and/or strain being assigned its associated operating state on the basis of the signals (S) of the integral system,
   - a rainflow classification of the stresses and/or strains being performed to determine the occurrence of damaging events in the form of load changes.

3. Method according to Claim 2,
   wherein the stress analysis and/or strain analysis involves

   - a separate rainflow matrix, in which counted load changes are divided proportionally between each of the operating states involved in producing the load changes, being produced for each operating state,
   - taking into consideration a residual by dividing the respective load change between the rainflow matrices of the operating states involved, in particular dividing it proportionally between the rainflow matrices of the operating states involved, according to a type of consideration, in particular whether there is no load change, a half load change or a complete load change.

4. Method according to Claim 2 or 3,
   wherein the stress analysis and/or strain analysis involves

   - a separate rainflow matrix, in which counted load changes are divided proportionally between each of the operating states involved in producing the load changes, being produced for each operating state by dividing the respective load change into two half load changes and storing each of them in the rainflow matrices of the operating states belonging to reversal points,
   - taking into consideration a residual by dividing the respective load change with a share of 50% each between the rainflow matrices of the operating states involved, according to a type of consideration, in particular whether there is no load change, a half load change or a complete load change.

5. Method according to Claim 2 or 3,
   wherein the stress analysis and/or strain analysis involves

   - a separate rainflow matrix, in which counted load changes are divided proportionally between each of the operating states involved in producing the load changes, being produced for each operating state by dividing the respective load change in weighted fashion with respect to the operating states involved in producing it and storing said load change accordingly in the rainflow matrices of these operating states,
   - taking into consideration a residual by dividing the respective load change between the rainflow matrices of the operating states involved in weighted fashion with respect to the operating states involved in producing it, according to a type of consideration, in particular whether there is no load change, a half load change or a complete load change.

6. Method according to Claim 5,
   wherein the weight of the respective operating state is determined by determining a period during which the respective load change occurred, and a total duration of the respective operating state within this period, and the weight is obtained as the ratio of the total operating state duration of the respective operating state to the total duration of the respective load change.

7. Method according to Claim 5,
   wherein the weight of the respective operating state is determined as the ratio of the accumulated absolute values of the stress and/or strain increments of the associated load changes in the respective operating state to the total stress and/or strain increment of the associated load changes, wherein the total stress and/or strain increment of the associated load changes is obtained from twice the difference between upper and lower stress or strain measured values of the reversal points of the associated load changes.

8. Method according to one of Claims 3 to 7,
   wherein the stress collectives and/or strain collectives for each operating state (BB) are determined by individually evaluating the rainflow matrices for each operating state, in particular by extracting the detected load changes.

9. Method according to Claim 2,
   wherein the stress analysis and/or strain analysis involves the determined load changes being converted into a damage parameter directly after they are determined and/or in consideration of the order in which they occur and each being added as damage parameters, in particular proportionally, to damage parameter collectives of the operating states involved in the associated load change, wherein the damage parameter collectives for each operating state represent the stress collectives and/or strain collectives for each operating state (BB).

10. Method according to Claim 2 or 9,
    wherein the stress analysis and/or strain analysis involves the determined load changes being converted into a damage parameter directly after they are determined and/or in consideration of the order in which they occur and each being added as damage parameters with half of the original prevalence to damage parameter collectives of the operating states involved in the associated load change, wherein the damage parameter collectives for each operating state represent the stress collectives and/or strain collectives for each operating state (BB).

11. Method according to Claim 2 or 9,
    wherein the stress analysis and/or strain analysis involves the determined load changes being converted into a damage parameter directly after they are determined and/or in consideration of the order in which they occur and each being added as damage parameters, in weighted fashion with respect to the operating states involved in producing them, to damage parameter collectives of the operating states involved in the associated load change, wherein the damage parameter collectives for each operating state represent the stress collectives and/or strain collectives for each operating state (BB).

12. Method according to Claim 11,
wherein the weight of the respective operating state is determined by determining a period during which the respective load change occurred, and a total duration of the respective operating state within this period, and the weight is obtained as the ratio of the total operating state duration of the respective operating state to the total duration of the respective load change.

13. Method according to Claim 11,
wherein the weight of the respective operating state is determined as the ratio of the accumulated absolute values of the stress and/or strain increments of the associated load changes in the respective operating state to the total stress and/or strain increment of the associated load changes, wherein the total stress and/or strain increment of the associated load changes is obtained from twice the difference between upper and lower stress or strain measured values of the reversal points of the associated load changes.

14. Method according to one of the preceding claims, wherein the time-normalized stress collectives and/or strain collectives for each operating state (ZBB) are determined by normalizing the stress collectives and/or strain collectives for each operating state (BB) in the prevalence of their individual collective stages to the duration of the associated operating state.

15. Device, designed and configured for carrying out a method according to one of the preceding claims, comprising

- at least one unit for detecting the stresses and/or strains on the component,
- at least one unit for detecting the signals (S) of the integral system that are relevant to the determination of operating states, and
- at least one processing unit,

wherein the device is completely arranged or arrangeable on the integral system or wherein at least one component of the device, in particular the at least one unit for detecting the stresses and/or strains on the component and/or the at least one unit for detecting the signals (S) of the integral system that are relevant to the determination of operating states, are/is arranged or arrangeable on the integral system.

**Revendications**

1. Procédé de détermination d'un état d'endommagement de composants, dans lequel on détermine pour un composant des états d'endommagement en fonction d'états de fonctionnement d'un système global comprenant le composant, en acquérant pendant un fonctionnement du système global une évolution dans le temps de sollicitations et/ou de charges du composant et une évolution dans le temps de signaux (S) du système global pertinents pour la détermination d'états de fonctionnement, en déterminant à partir des signaux (S) acquis des états de fonctionnement survenus du système global, notamment une évolution dans le temps des états de fonctionnement survenus, en déterminant des événements dommageables à partir des sollicitations et/ou des charges acquises et en les associant aux états de fonctionnement, en déterminant des collectifs de sollicitations et/ou des collectifs de charges par état de fonctionnement (BB) et en déterminant des collectifs de sollicitations et/ou des collectifs de charges normés dans le temps par état de fonctionnement (ZBB) à l'aide d'une durée de l'état de fonctionnement respectif, dans lequel, au moyen des collectifs de sollicitations et/ou des collectifs de charges normés dans le temps par état de fonctionnement (ZBB)

- l'état d'endommagement est déterminé pour le composant en fonction des états de fonctionnement survenus du système global, et/ou l'état d'endommagement futur est déterminé en fonction des états de fonctionnement futurs pronostiqués du système global comprenant le composant, et/ou
- l'état d'endommagement est déterminé pour un autre composant réalisé de la même manière que ce composant en fonction des états de fonctionnement survenus d'un autre système global comprenant cet autre composant et réalisé de la même manière que le système global, et/ou l'état d'endommagement futur est déterminé en fonction des états de fonctionnement futurs pronostiqués de l'autre système global comprenant l'autre composant.

**2.** Procédé selon la revendication 1,

dans lequel une classification des signaux (S) du système global et, de ce fait, une définition d'états de fonctionnement possibles sont effectuées afin d'obtenir l'évolution dans le temps des états de fonctionnement survenus, et

dans lequel la durée de l'état de fonctionnement respectif est déterminée en formant pour les signaux (S) du système global, avec les classes dans lesquelles ils sont répartis, un histogramme multidimensionnel à l'aide duquel la durée de l'état de fonctionnement respectif est déterminée, et

dans lequel la détermination de l'histogramme s'effectue par un comptage de valeurs instantanées rapportées multiparamétriques, et

dans lequel des événements dommageables sont déterminés à partir des sollicitations et/ou des charges acquises et sont associés aux états de fonctionnement et des événements dommageables par état de fonctionnement (EB) sont ainsi déterminés, en effectuant une analyse des sollicitations et/ou une analyse des charges, et dans lequel, dans l'analyse des sollicitations et/ou l'analyse des charges,

- chaque sollicitation et/ou charge est associée à son état de fonctionnement correspondant sur la base des signaux (S) du système global,
- une classification rainflow des sollicitations et/ou des charges est effectuée pour déterminer la survenue d'événements dommageables sous forme de changements de contrainte.

**3.** Procédé selon la revendication 2,
dans lequel, dans l'analyse des sollicitations et/ou l'analyse des charges

- une matrice rainflow séparée est générée pour chaque état de fonctionnement, dans laquelle les changements de contrainte comptés sont répartis proportionnellement entre les états de fonctionnement respectivement impliqués dans la création des changements de contrainte,
- pour une prise en compte d'un résidu, le changement de contrainte respectif est réparti selon un type de prise en compte, notamment s'il n'y a pas de changement de contrainte, un demi-changement de contrainte ou un changement de contrainte complet, entre les matrices rainflow des états de fonctionnement impliqués, notamment est réparti proportionnellement entre les matrices rainflow des états de fonctionnement impliqués.

**4.** Procédé selon la revendication 2 ou 3,
dans lequel, dans l'analyse des sollicitations et/ou l'analyse des charges

- une matrice rainflow séparée est générée pour chaque état de fonctionnement, dans laquelle les changements de contrainte comptés sont répartis proportionnellement entre les états de fonctionnement respectivement impliqués dans la création des changements de contrainte, en répartissant le changement de contrainte respectif en deux demi-changements de contrainte et en les enregistrant respectivement dans les matrices rainflow des états de fonctionnement correspondant aux points d'inversion,
- pour une prise en compte d'un résidu, le changement de contrainte respectif est réparti à 50 % sur les matrices rainflow des états de fonctionnement impliqués en fonction d'un type de prise en compte, notamment s'il n'y a pas de changement de contrainte, un demi-changement de contrainte ou un changement de contrainte complet.

**5.** Procédé selon la revendication 2 ou 3,
dans lequel, dans l'analyse des sollicitations et/ou l'analyse des charges

- pour chaque état de fonctionnement, une matrice rainflow séparée est générée, dans laquelle les changements de contrainte comptés sont répartis proportionnellement entre les états de fonctionnement respectivement impliqués dans la création des changements de contrainte, en répartissant le changement de contrainte respectif de manière pondérée par rapport aux états de fonctionnement impliqués dans sa création et en l'enregistrant en conséquence dans les matrices rainflow de ces états de fonctionnement,
- pour une prise en compte d'un résidu, le changement de contrainte respectif est réparti entre les matrices rainflow des états de fonctionnement impliqués en fonction du type de prise en compte, notamment s'il n'y a pas de changement de contrainte, un demi-changement de contrainte ou un changement de contrainte complet, pondéré par rapport aux états de fonctionnement impliqués dans sa création.

**6.** Procédé selon la revendication 5,
dans lequel le poids de l'état de fonctionnement respectif est déterminé en déterminant une période pendant laquelle le changement de contrainte respectif s'est produit et une durée totale de l'état de fonctionnement respectif dans cette période, et le poids est obtenu comme le rapport de la durée totale de l'état de fonctionnement respectif à la durée totale du changement de contrainte respectif.

**7.** Procédé selon la revendication 5,
dans lequel le poids de l'état de fonctionnement respectif étant déterminé comme le rapport des valeurs accumulées des incréments de sollicitation et/ou de charge des changements de contrainte correspondants dans l'état de fonctionnement respectif à l'incrément de sollicitation et/ou de charge total des changements de contrainte correspondants, l'incrément de sollicitation et/ou de charge total des changements de contrainte correspondants étant obtenu à partir du double de la différence entre des valeurs de mesure de sollicitation et/ou de charge supérieure et inférieure des points d'inversion des changements de contrainte correspondants.

**8.** Procédé selon l'une quelconque des revendications 3 à 7,
dans lequel les collectifs de sollicitations et/ou les collectifs de charges par état de fonctionnement (BB) sont déterminés en évaluant individuellement les matrices rainflow pour chaque état de fonctionnement, notamment en extrayant les changements de contrainte acquis.

**9.** Procédé selon la revendication 2,
dans lequel, dans l'analyse des sollicitations et/ou l'analyse des charges, les changements de contrainte déterminés sont convertis en un paramètre d'endommagement directement après leur détermination et/ou en tenant compte de l'ordre de leur survenue et sont ajoutés respectivement en tant que paramètres d'endommagement, notamment proportionnellement, à des collectifs de paramètres d'endommagement des états de fonctionnement impliqués dans le changement de contrainte correspondant, dans lequel les collectifs de paramètres d'endommagement par état de fonctionnement représentent les collectifs de sollicitations et/ou les collectifs de charges par état de fonctionnement (BB).

**10.** Procédé selon la revendication 2 ou 9,
dans lequel, dans l'analyse des sollicitations et/ou l'analyse des charges, les changements de contrainte déterminés sont convertis en un paramètre d'endommagement directement après leur détermination et/ou en tenant compte de l'ordre de leur survenue et sont ajoutés respectivement en tant que paramètres d'endommagement avec la moitié de la fréquence initiale, à des collectifs de paramètres d'endommagement des états de fonctionnement impliqués dans le changement de contrainte correspondant, dans lequel les collectifs de paramètres d'endommagement par état de fonctionnement représentent les collectifs de sollicitations et/ou les collectifs de charges par état de fonctionnement (BB).

**11.** Procédé selon la revendication 2 ou 9,
dans lequel, dans l'analyse des sollicitations et/ou l'analyse des charges, les changements de contrainte déterminés sont convertis directement après leur détermination et/ou en tenant compte de l'ordre de leur survenue en un paramètre d'endommagement et sont ajoutés respectivement en tant que paramètre d'endommagement, répartis de manière pondérée par rapport aux états de fonctionnement impliqués dans leur survenue, à des collectifs de paramètres d'endommagement des états de fonctionnement impliqués dans le changement de contrainte correspondant, dans lequel les collectifs de paramètres d'endommagement par état de fonctionnement représentent les collectifs de sollicitations et/ou les collectifs de charges par état de fonctionnement (BB).

**12.** Procédé selon la revendication 11,
dans lequel le poids de l'état de fonctionnement respectif est déterminé en déterminant une période pendant laquelle le changement de contrainte respectif s'est produit et une durée totale de l'état de fonctionnement respectif dans cette période, et le poids est obtenu comme le rapport de la durée totale de l'état de fonctionnement respectif à la durée totale du changement de contrainte respectif.

**13.** Procédé selon la revendication 11,
dans lequel le poids de l'état de fonctionnement respectif étant déterminé comme le rapport des valeurs accumulées des incréments de sollicitation et/ou de charge des changements de contrainte correspondants dans l'état de fonctionnement respectif à l'incrément de sollicitation et/ou de charge total des changements de contrainte correspondants, l'incrément de sollicitation et/ou de charge total des changements de contrainte correspondants étant obtenu à partir du double de la différence entre des valeurs de mesure de sollicitation et/ou de charge supérieure et inférieure des points d'inversion des changements de contrainte correspondants.

**14.** Procédé selon l'une quelconque des revendications précédentes,
dans lequel les collectifs de sollicitations et/ou les collectifs de charges par état de fonctionnement normés dans le temps (ZBB) sont déterminés en normant les collectifs de sollicitations et/ou les collectifs de charges par état de fonctionnement (BB) dans la fréquence de leurs différents niveaux collectifs sur la durée de l'état de fonctionnement associé.

**15.** Dispositif, réalisé et adapté pour mettre en œuvre un procédé selon l'une quelconque des revendications précédentes,
comprenant

- au moins une unité d'acquisition des sollicitations et/ou des charges du composant,
- au moins une unité d'acquisition des signaux (S) du système global pertinents pour la détermination d'états de fonctionnement, et
- au moins une unité de traitement,

le dispositif étant agencé ou pouvant être agencé entièrement sur le système global ou au moins un composant du dispositif, notamment l'au moins une unité d'acquisition des sollicitations et/ou des charges du composant et/ou l'au moins une unité d'acquisition des signaux (S) du système global pertinents pour la détermination d'états de fonctionnement, étant agencé ou pouvant être agencé sur le système global.

FIG 1

**IN DER BESCHREIBUNG AUFGEFÜHRTE DOKUMENTE**

**In der Beschreibung aufgeführte Patentdokumente**

- DE 10060694 A1

- DE 102005004023 A1